# EUROPÄISCHE PATENTSCHRIFT

(11) **EP 4 559 305 B1**
(45) Veröffentlichungstag und Bekanntmachung des Hinweises auf die Patenterteilung: **08.04.2026**
(21) Anmeldenummer: 24197517.6
(22) Anmeldetag: 30.08.2024
(51) Int. Cl.: A01D 85/00, A01D 90/00, A01F 25/02, E02F 9/26, C05F 17/993, C05F 17/921, A01C 3/08, A01B 69/00, C05F 17/70, E01C 19/00

(54) **STEUERUNGSSYSTEM FÜR EINEN MOBILEN UMSETZER**
CONTROL SYSTEM FOR A MOBILE CONVERTER
SYSTÈME DE COMMANDE POUR CONVERTISSEUR MOBILE

(30) Priorität: 22.11.2023 DE 102023004795
(43) Veröffentlichungstag der Anmeldung: 28.05.2025
(73) Patentinhaber: JT RecTec GmbH, 42551 Velbert (DE)
(72) Erfinder: Wiechmann, Jens, 27801 Dötlingen-Neerstedt II (DE); Hölscher, Thomas, 59519 Möhnesee (DE)
(74) Vertreter: Von Rohr Patentanwälte Partnerschaft mbB

(56) Entgegenhaltungen:
- EP-A1- 4 324 315
- EP-B1- 0 887 660
- DE-A1- 102022 102 047
- DE-A1- 102023 117 993

## Beschreibung

Die vorliegende Erfindung betrifft ein Steuerungssystem für einen mobilen Umsetzer zum Umsetzen von zu einer Miete gehäuftem Schüttgut, insbesondere einer Kompostmiete. Des Weiteren betrifft die vorliegende Erfindung einen mobilen Umsetzer sowie die Verwendung eines Steuerungssystems der vorgenannten Art für einen mobilen Umsetzer und ein Verfahren zur Steuerung und/oder Regelung eines mobilen Umsetzers mit einem Steuerungssystem der vorgenannten Art.

Mobile Umsetzer der vorgenannten Art zum Umsetzen von Schütt- bzw. Rottegut, insbesondere zum Umsetzen einer Kompostmiete, sind aus dem Stand der Technik bekannt. Insbesondere bezieht sich die vorliegende Erfindung auf das technische Gebiet der mobilen Umsetzer für dreieckförmige Kompostmieten (sogenannte Dreiecksmieten). Die dreieckförmige Ausbildung der Kompostmiete bezieht insbesondere auf den Querschnitt der Kompostmiete. Letztlich kann eine langgestreckte Anhäufung mit einem zumindest im Wesentlichen dreieckförmigen Querschnitt durch einen mobilen Umsetzer umgesetzt werden.

Mobile Umsetzer für Kompostmieten sind aus dem Stand der Technik bekannt. In diesem Zusammenhang darf beispielsweise auf die DE 202 07 485 U1 verwiesen werden. Die DE 202 07 485 U1 betrifft ein Fahrzeug zum Umsetzen von Kompostmieten, wobei das Fahrzeug ein Fahrwerk und ein von dem Fahrwerk getragenes Fahrzeugchassis sowie eine am Fahrzeugchassis gelagerte und rotorisch antreibbare Kompostbearbeitungswalze aufweist. An der Kompostbearbeitungswalze sind entsprechende Werkzeuge zur Aufnahme und zum Hochschleudern von Material der umzusetzenden Dreiecksmiete vorgesehen. Das Fahrzeugchassis überspannt brückenartig die Kompostbearbeitungswalze, die an dem Fahrzeugchassis um eine horizontale Querachse rotorisch antreibbar gelagert ist. Zum Hochschleudern und Umsetzen des Schüttgutes weist die Kompostbearbeitungswalze Wurfwerkzeuge auf. Um eine dreiecksförmige Ablage der Kompostmiete zu erreichen, ist die Kompostbearbeitungswalze ferner mit nach innen verlaufenden Schnecken versehen. Zudem ist zwischen der Kompostbearbeitungswalze und der Unterseite des Fahrzeugchassis ein Durchtrittskanal vorhanden, durch den der hochgeworfene Kompost geschleudert werden kann, bevor er sich hinter der Walze wieder in Dreiecksform aufhäuft.

Ein Umsetzen der Kompostmiete führt dazu, dass der Kompostierungsvorgang des Schüttgutes beschleunigt werden kann, insbesondere da durch den mobilen Umsetzer und durch die Umsetzung des Schüttgutes das Einbringen von Luft in das Schüttgut ermöglicht wird, was den Kompostierungsvorgang beschleunigt. Ohne eine solche Umsetzung würde es vergleichsweise lange dauern, Schüttgut in Kompostmieten verrotten zu lassen. Durch Umsetzer der vorgenannten Art wird also die Möglichkeit geschaffen, diesen Vorgang zu beschleunigen.

Nachteilig an dem aus der DE 202 07 485 U1 bekannten mobilen Umsetzer ist es, dass dieser zwar eine Umsetzung der Kompostmiete als solches ermöglicht, jedoch die Steuerung und Bedienung des Umsetzers durch eine Bedienperson erfolgen muss. Diese Bedienperson muss manuell eine Vielzahl von Einstellmöglichkeiten vorgeben und den Fahrtverlauf des Umsetzers mit hoher Aufmerksamkeit aufwendig steuern. Da die Kompostmiete bis zur vollständigen Verrottung mehrfach umgesetzt werden musss, verursacht dies einen hohen personellen und betrieblichen Aufwand benötigt.

Die EP 0 887 660 B1 betrifft eine Vorrichtung an Landmaschinen zur berührungslosen Abtastung.

Aufgabe der vorliegenden Erfindung ist es nun, die vorgenannten Nachteile des Standes der Technik zu vermeiden oder aber zumindest im Wesentlichen zu reduzieren.

Die vorgenannte Aufgabe wird durch eine Verwendung eines Steuerungssystems für einen mobilen Umsetzer zum Umsetzen von zu einer Miete gehäuftem Schüttgut, insbesondere einer Kompostmiete, nach Anspruch 1 gelöst.

Das erfindungsgemäße Steuerungssystem ist zur Steuerung und/oder Regelung des Umsetzers ausgebildet. Demnach kann der Umsetzer im Hinblick auf seine Betriebsweise und/oder seinen Fahrweg durch das Steuerungssystem automatisch eingestellt und geregelt werden.

Das erfindungsgemäße Steuerungssystem weist eine erste Sensoreinrichtung zur Erfassung der Position der Mietenoberseite vor dem Umsetzer in Bezug zur Fahrtrichtung des Umsetzers und eine zweite Sensoreinrichtung zur Erfassung der Position der Mietenoberseite und insbesondere der Mietenbreite im Bereich des Umsetzers auf. Die Sensoreinrichtungen können beabstandet voneinander oder direkt nebeneinander angeordnet sein.

Die Positionen der Mietenoberseite, die von der jeweiligen Sensoreinrichtung erfasst werden, sind jedoch zueinander beabstandet.

Dabei ist vorgesehen, dass die erste Sensoreinrichtung eine Position im Bereich vor dem Umsetzer erfasst bzw. misst. Die zweite Sensoreinrichtung kann insbesondere die Position der Mietenoberseite im Bereich des Umsetzers oder unmittelbar vor dem Umsetzer messen bzw. erfassen. Die von der jeweiligen Sensoreinrichtung erfassten Bereiche der Mietenoberseite sind demnach zueinander beabstandet.

Die zweite Sensoreinrichtung erfasst insbesondere eine Position der Mietenoberseite, die insbesondere weniger als 1 m von dem Umsetzer entfernt ist.

Demnach erfasst die erste Sensoreinrichtung eine Position der Mietenoberseite, die in Fahrtrichtung vor dem Umsetzer liegt, und auch eine Position der Mietenoberseite der Miete, die noch nicht vom Umsetzer umgesetzt worden ist. Diese erste Sensoreinrichtung umfasst somit insbesondere wenigstens einen "vorausschauenden" Sensor, wohingegen die zweite Sensoreinrichtung insbesondere die Mietenoberseite desjenigen Bereiches der Miete erfasst, der gerade in dem Moment der Messung durch die zweite Sensoreinrichtung oder wenige Sekunden danach umgesetzt wird.

Die Sensoreinrichtungen können jeweils wenigstens einen Sensor zur Erfassung der Position der Mietenoberseite aufweisen.

Erfindungsgemäß kann anhand der von der ersten und zweiten Sensoreinrichtung erfassten Messdaten der Fahrweg des Umsetzers und/oder wenigstens eine Einstellgröße und/oder wenigstens eine Funktion des Umsetzers steuerbar und/oder regelbar sein.

Die von den Sensoreinrichtungen erfassten Daten dienen somit insbesondere unmittelbar zur Steuerung/Regelung des Umsetzers.

Für die Steuerung und/oder Regelung des Umsetzers sind unterschiedliche Möglichkeiten denkbar. So können neben dem Fahrweg des Umsetzers also auch unterschiedliche Einstellgrößen und/oder Funktionen des Umsetzers steuerbar und/oder regelbar sein. Der Begriff "Einstellgrößen" des Umsetzers ist in diesem Zusammenhang weit zu verstehen. So kann/können insbesondere die Drehzahl der Umsetzwalze, die Geschwindigkeit des Umsetzers, die Positionen einzelner Bestandteile des Umsetzers vorgegeben und/oder eingestellt werden. Auch die Funktionen des Umsetzers können unterschiedlicher Art sein. So kann beispielsweise neben einer festgelegten Position eines Bestandteils des Umsetzers, wie beispielsweise der Spurräumer und/oder die Heckklappe des Umsetzers, auch ein Bewegungsablauf dieser Bestandteile vorgegeben werden, beispielsweise ein gesteuertes und/oder geregeltes Heben oder Senken der Heckklappe.

Die Erfindung ermöglicht es somit anhand der tatsächlichen Form der Miete, den Betrieb des mobilen Umsetzers zu steuern und/oder zu regeln. So kann sich beispielsweise der Fahrweg des Umsetzers an nicht gerade ausgerichtete Mieten anpassen und insbesondere zumindest teilweise mäanderförmigen Verläufen der Miete folgen. Alternativ oder zusätzlich kann vorgesehen sein, dass nicht gerade ausgerichtete Mieten bzw. Mieten mit mäanderförmigen Verläufen durch das erfindungsgemäße Steuerungssystem zu zumindest im Wesentlichen gerade verlaufenden Mieten umgesetzt werden können. Ein Umsetzen zu einer geraden Miete kann durch einen einmaligen oder mehrfachen Umsetzprozess erfolgen.

In der Praxis werden Mieten per Radlader aufgesetzt. In der Regel weisen die Mieten dann einen zumindest im Wesentlichen geraden Verlauf in Längsrichtung der Miete auf. Geringe Abweichungen können allerdings auftreten, insbesondere da der Radlader keine exakte Positionierung ermöglichen kann. Derartige Abweichungen können durch einen ungeraden Verlauf der Miete oder durch ein zu nahes Anordnen des Randes der Miete an störende Bauelemente, wie Stützpfeiler, Mauer etc., vorhanden sein. Wenn der Rand der Miete zu nah an störende Bauelemente angeordnet wird, dann würde ohne das erfindungsgemäße Steuerungssystem kein Umsetzen der Miete ohne eine Beschädigung am Umsetzer erfolgen können. Das erfindungsgemäße Steuerungssystem bietet nun die Möglichkeit, dass die vorgenannten Abweichungen berücksichtigt und insbesondere begradigt werden können. Dies kann bedarfsweise auch mehrere Durchläufe des Umsetzprozesses dauern.

Im Stand der Technik ist dies nur möglich durch eine intensive Überprüfung des tatsächlichen Fahrtverlaufes durch eine Bedienperson. Diese Bedienperson muss dann die derzeitige Position der Miete in Korrelation zum weiteren Verlauf der Miete setzen und dementsprechend den Fahrweg des Umsetzers anpassen - und zwar sowohl, wenn dem ungeraden Verlauf einer Miete gefolgt werden soll, als auch, wenn eine ungerade Miete zu einer geraden Miete umgesetzt werden soll. Dies ist mit einem sehr hohen Aufwand und aufgrund der menschlichen Einbindung mit einer nicht unbeachtlichen Fehleranfälligkeit verbunden. So wird in der Regel in Kauf genommen, dass der Umsetzer nicht exakt zur Miete ausgerichtet ist, was allerdings die Umsetzung der Miete verschlechtert.

Letztlich ermöglicht das erfindungsgemäße Steuerungssystem insbesondere eine autonome bzw. automatische Fahrweise für den Umsetzer, indem die Daten der ersten und zweiten Sensoreinrichtung entsprechend ausgewertet und verarbeitet werden. Die Position der Mietenoberseite ist in diesem Zusammenhang im Hinblick auf die Ausrichtung und die Einstellung der weiteren Funktionen des Umsetzers insbesondere relevant.

Des Weiteren ist im Zusammenhang mit der vorliegenden Erfindung insbesondere vorgesehen, dass die Position der Mietenoberseite insbesondere die höchste Position der Miete im von der jeweiligen Sensoreinrichtung abgedeckten bzw. abgetasteten Sensorfeld bzw. Sensorbereich ist. Die Position der Mietenoberseite kennzeichnet folglich, welche Höhe die Miete in diesen durch die jeweilige Sensoreinrichtung abgetasteten Sensorfeld bzw. Sensorbereich aufweist. Die Begriffe Sensorfeld und Sensorbereich können insbesondere synonym verwendet werden.

Bei einer besonders bevorzugten Ausführungsform der vorliegenden Erfindung ist vorgesehen, dass eine mit den Sensoreinrichtungen gekoppelte Auswerteeinrichtung des Steuerungssystems vorgesehen ist, wobei die Auswerteeinrichtung die von der ersten und zweiten Sensoreinrichtung erfassten Messdaten verarbeitet. In der Auswerteeinrichtung kann folglich insbesondere die Position der Mietenoberseite im jeweils durch die jeweilige Sensoreinrichtung abgetasteten Sensorfeld ermitteln und entsprechend verarbeiten. In der Auswerteeinrichtung kann ferner die jeweils erfasste Mietenoberseite zu vorgegebenen bzw. erwarteten Werten für die Mietenoberseite in Korrelation gesetzt werden.

Die Auswerteeinrichtung kann ferner am Umsetzer angeordnet sein. Grundsätzlich kann auch vorgesehen sein, dass die Auswerteeinrichtung unabhängig von dem Umsetzer bereitgestellt wird, dann ist die Auswerteeinrichtung jedenfalls mit den Sensoreinrichtungen gekoppelt. Beispielsweise kann die Auswerteeinrichtung auch Cloud-basiert und/oder extern angeordnet sein. Insbesondere ermöglicht die Auswerteeinrichtung eine Verarbeitung der jeweiligen Sensordaten und damit einhergehend die tatsächliche Bestimmung der Mietenoberseite und bevorzugt nach Verarbeitung die Vorgabe von einzustellenden Einstellgrößen und/oder Funktionen.

Des Weiteren ist bei einer weiteren bevorzugten Ausführungsform vorgesehen, dass aufgrund der durch die erste und zweite Sensoreinrichtung erfassten Messdaten ein Richtungsvektor zur Steuerung/Regelung des Fahrwegs des Umsetzers durch die Auswerteeinrichtung ermittelt wird und/oder ermittelbar ist. Dieser Richtungsvektor kann somit die Position des Umsetzers, die beispielsweise durch die zweite Sensoreinrichtung erfasst wird, in Zusammenhang mit der Mietenoberseite setzen, die von der ersten Sensoreinrichtung erfasst wird. Dadurch, dass insbesondere eine dreieckförmige Miete vorgesehen ist, bezieht sich die Mietenoberseite bevorzugt auf den höchsten Punkt der Miete in dem jeweiligen Sensorbereich, wodurch auch eine entsprechende Abweichung der Position der Mietenoberseiten erfasst werden kann, was wiederum zur Ermittlung des Richtungsvektors genutzt werden kann.

Beispielsweise ist bevorzugt die Mietenoberseite bzw. der Verlauf der Miete in Längsrichtung geradlinig ausgerichtet. In der Praxis ist jedoch festgestellt worden, dass gewisse mäanderförmige Strukturen der Mieten auftreten, wodurch von einer geraden Ausrichtung der Mietenoberseite abgewichen wird. Diesem Verlauf kann der Umsetzer nun durch den durch die Auswerteeinrichtung vorgegebenen Richtungsvektor entsprechend folgen und/oder diesen Verlauf bevorzugt zu einem geraden Verlauf für die Mietenoberseite und/oder für die Miete begradigen. Dieser Richtungsvektor kann dann anhand der von der ersten und zweiten Sensoreinrichtung jeweils erfassten Position der Mietenoberseite entsprechend vorgegeben werden. So kann beispielsweise eine Abweichung vom vorgegebenen, geraden Verlauf der Miete entsprechend berücksichtigt werden, insbesondere wobei der Umsetzer durch das Steuerungssystem zur Begradigung des Verlaufes der Miete ausgebildet ist.

In einer weiteren bevorzugten Ausführungsform ist vorgesehen, dass der von der zweiten Sensoreinrichtung erfasste Sensorbereich der Mietenoberseite in Fahrtrichtung des Umsetzers vor dem Umsetzer liegt, insbesondere um weniger als 0,5 m, bevorzugt weniger als 0,2 m, von dem Umsetzer beabstandet ist. Besonders bevorzugt liegt das von der zweiten Sensoreinrichtung erfasste Sensorfeld bzw. der Sensorbereich, in dem die Mietenoberseite ermittelt wird, in Fahrtrichtung unmittelbar vor dem Umsetzer. In weiteren Ausführungsformen kann der zweite Sensorbereich auch vom Umsetzer beabstandet sein, insbesondere in Fahrtrichtung vor dem Umsetzer. Dabei kann vorgesehen sein, dass die zweite Sensoreinrichtung einen Sensorbereich bzw. ein Sensorfeld abtastet, wobei innerhalb dieses Feldes dann die höchste Position der Miete bestimmt werden kann, die somit die Position der Mietenoberseite angeben kann.

Die Mietenoberseite kann im Sinne der vorliegenden Erfindung auch als Mietenoberkante bezeichnet werden.

Ferner ist vorzugsweise der von der ersten Sensoreinrichtung erfasste erste Sensorbereich der Mietenoberseite wenigstens 0,5 m, bevorzugt 0,5 m bis 20 m, weiter bevorzugt zwischen 1 m bis 10 m, weiter bevorzugt weiter zwischen 1,5 m bis 4 m, von dem von der zweiten Sensoreinrichtung erfassten zweiten Sensorbereich der Mietenoberseite beabstandet. Die vorgenannte Beabstandung kann insbesondere die geringste Beabstandung zwischen den äußersten, einander zugewandten Punkten der Sensorbereiche angeben, da die jeweiligen Sensoreinrichtungen die Mietenoberseite in einem bestimmten Bereich bzw. einer gewissen räumlichen Ausdehnung ermitteln können. Der vorgenannte Abstand gibt dabei insbesondere den absoluten Abstand zwischen beiden Bereichen an. Dieser Abstand kann demnach zur Ermittlung des Richtungsvektors und/oder zur Vorgabe des weiteren Fahrwegs des Umsetzers genutzt werden.

Alternativ oder zusätzlich kann vorgesehen sein, dass der von der ersten Sensoreinrichtung erfasste erste Sensorbereich der Mietenoberseite wenigstens 0,5 m, bevorzugt zwischen 0,5 m bis 20 m, weiter bevorzugt zwischen 1 m bis 10 m, insbesondere zwischen 1,5 m bis 4 m, in Fahrtrichtung vor dem Umsetzer liegt. Somit wird derjenige Sensorbereich der Mietenoberseite durch die erste Sensoreinrichtung abgetastet, der noch nicht von dem Umsetzer umgesetzt worden ist.

Darüber hinaus ist vorzugsweise der von der zweiten Sensoreinrichtung erfasste Sensorbereich der Mietenoberseite höchstens 5 m, weiter bevorzugt zwischen 0,1 m bis maximal 3 m, in Fahrtrichtung vor dem Umsetzer angeordnet bzw. liegt in dem vorgenannten Abstand vor dem Umsetzer. Dieser Abstand wird insbesondere als "im Bereich des Umsetzers" verstanden. Demnach schließt "im Bereich des Umsetzers" für den zweiten Sensorbereich auch Bereiche ein, die (nur geringfügig) von dem Umsetzer beabstandet sind.

Insbesondere ist für jede Messung der erste Sensorbereich weiter vom Umsetzer beabstandet bzw. weist einen größeren Abstand zum Umsetzer in Fahrtrichtung auf als der zweite Sensorbereich.

Daher kann besonders bevorzugt der von der ersten Sensoreinrichtung erfasste erste Sensorbereich weiter weg vom Umsetzer als der von der zweiten Sensoreinrichtung erfasste zweite Sensorbereich angeordnet sein. Besonders bevorzugt ist der erste Sensorbereich um wenigstens 0,5 m, weiter bevorzugt zwischen 0,5 m und 20 m, weiter bevorzugt weiter zwischen 1 m und 10 m und insbesondere zwischen 1,5 m und 4 m, weiter weg beabstandet vom Umsetzer - nämlich insbesondere in Fahrtrichtung vor dem Umsetzer.

Bei einer weiteren bevorzugten Ausführungsform ist vorgesehen, dass die erste Sensoreinrichtung wenigstens einen Radarsensor aufweist. Alternativ oder zusätzlich kann vorgesehen sein, dass die zweite Sensoreinrichtung wenigstens einen Radarsensor und/oder wenigstens einen, bevorzugt zwischen 2 bis 10, insbesondere 3, Ultraschallsensoren aufweist. Bei einer besonders bevorzugten Ausführungsform ist vorgesehen, dass die erste Sensoreinrichtung einen Radarsensor und die zweite Sensoreinrichtung drei Ultraschallsensoren aufweist. Dabei können die mehreren Ultraschallsensoren insbesondere auch dazu ausgebildet sein, neben der Position der Mietenoberseite auch die Mietenbreite zu erfassen. Im Zusammenhang mit beim Zustandekommen der vorliegenden Erfindung durchgeführten Versuchen ist festgestellt worden, dass besonders Radarsensoren und Ultraschallsensoren im hohen Maße dazu geeignet sind, die Position der Mietenoberseite der Miete zu erfassen und langfristig einen wirtschaftlichen Einsatz des Umsetzers mit dem erfindungsgemäßen Steuerungssystem zu ermöglichen. Radarsensoren können insbesondere derart ausgebildet sein, dass die Position des höchsten Punktes in dem jeweiligen Sensorfeld bzw. Sensorbereich, der durch die jeweilige Sensoreinrichtung abgetastet wird, erfasst wird.

Dabei kann der Radarsensor insbesondere über den vorgenannten entsprechenden Sensorbereich eine Abtastung durchführen. Dies kann alternativ auch über die Ultraschallsensoren sichergestellt werden, so dass eine effiziente Erfassung der Position der Mietenoberseite erfolgen kann. Außerdem ermöglichen die vorgenannten Sensoren auf vergleichsweise kostengünstige Art die Position der Mietenoberseite und den Verlauf der Miete erfassen bzw. messen zu können.

Vorzugsweise weist die erste und/oder zweite Sensoreinrichtung alternativ oder zusätzlich optische Sensoren und/oder eine optische Sensorik zur Erfassung der Mietenoberseite und/oder der Miete auf. Optische Sensorik bzw. optische Sensoren sind insbesondere beim Verfahren des Umsetzers und zur effizienten Feststellung der Mietenform sinnvoll.

Ferner kann die erste und die zweite Sensoreinrichtung am Umsetzer anordnenbar sein. Besonders bevorzugt sind dabei sowohl die erste als auch die zweite Sensoreinrichtung am Umsetzer angeordnet. Die Positionen der Sensoreinrichtungen am Umsetzer können dabei unterschiedlich vorgegeben sein. Beispielsweise kann die erste und/oder die zweite Sensoreinrichtung am Fahrzeugchassis des Umsetzers und/oder an der Fahrerkabine oder an weiteren Bestandteilen des Umsetzers angeordnet sein. Eine Anordnung erfolgt insbesondere derart, dass die Position der Mietenoberseite in dem jeweiligen Sensorbereich sicher erfasst werden kann.

Demnach kann die erste und/oder die zweite Sensoreinrichtung oberhalb des Umsetzers, bevorzugt mit einem Abstand von 0,1 m bis 2 m von der Oberseite des Umsetzers, angeordnet sein. Die Fahrerkabine kann Teil des Umsetzers sein oder unabhängig vom Umsetzer bereitgestellt werden. Alternativ oder zusätzlich kann auch vorgesehen sein, dass die erste und/oder die zweite Sensoreinrichtung unmittelbar an der Fahrerkabine angeordnet ist/sind.

In weiteren Ausführungsformen wird insbesondere der Umsetzer ohne Fahrerkabine bereitgestellt, insbesondere wobei die Fahrerkabine optional auf Kundenwunsch bereitgestellt werden kann.

Alternativ oder zusätzlich kann vorgesehen sein, dass die erste und/oder die zweite Sensoreinrichtung von dem Umsetzer beabstandet angeordnet ist, insbesondere in Fahrtrichtung vor dem Umsetzer, bevorzugt um maximal 1 m, weiter bevorzugt zwischen 0,1 m und 0,7 m. In diesem Zusammenhang kann weiter vorgesehen sein, dass die erste und/oder die zweite Sensoreinrichtung über wenigstens ein Verbindungsmittel mit dem Umsetzer verbunden ist - und demnach zumindest mittelbar am Umsetzer angeordnet ist. Durch die vorgenannte Anordnung der Sensoreinrichtungen kann ein sicheres Erfassen der Mietenoberseite in Fahrtrichtung vor dem Umsetzer erfolgen.

Zudem kann die Auswerteeinrichtung durch Verarbeiten der von der ersten und zweiten Sensoreinrichtung erfassten Messdaten zur Ermittlung des Mietenanfangs und/oder des Mietenendes ausgebildet sein. Diese Ermittlung ermöglicht, dass der Betrieb des Umsetzers im Hinblick auf den Mietenanfang oder im Hinblick auf das Mietenende entsprechend durch das Steuerungssystem angepasst werden kann. So sind beispielsweise beim Umsetzer für den Mietenanfang und das Mietenende unterschiedliche Funktionen und Parameter des Umsetzers besonders zum Umsetzen der Miete geeignet. Somit kann der Kompostiervorgang im Gesamten deutlich verbessert werden.

Besonders bevorzugt ist das Steuerungssystem derart ausgebildet, dass es bei Erkennen eines Mietenanfangs und/oder eines Mietenendes wenigstens eine Funktion und/oder Einstellgröße des Umsetzers verstellt und/oder wenigstens eine Funktion und/oder Einstellgröße des Umsetzers aktiviert wird. Insbesondere kann die Drehzahl eines Antriebsmotors des Umsetzers, die Fahrgeschwindigkeit, die Position wenigstens eines Spurräumers, die Rotordrehzahl einer Umsetzwalze des Umsetzers, die Position einer Heckklappe des Umsetzers und/oder ein Heben bzw. Senken der Umsetzwalze veranlasst werden. Alternativ oder zusätzlich kann vorgesehen sein, dass das Steuerungssystem derart ausgebildet ist, dass es bei Erkennen eines Mietenanfangs und/oder eines Mietenendes einen Einfahr- bzw. Ausfahrprozess des Umsetzers startet, insbesondere wobei beim Einfahr- bzw. Ausfahrprozess Werte und/oder Verläufe der Einstellgrößen und/oder Funktionen des Umsetzers vorgegeben werden. Insbesondere ist die Drehzahl eines Antriebsmotors des Umsetzers, die Fahrgeschwindigkeit, die Position wenigstens eines Spurräumers, die Rotordrehzahl einer Umsetzwalze des Umsetzers, die Position einer Heckklappe des Umsetzers und/oder die Position der Umsetzwalze eine Einstellgröße und/oder durch eine entsprechende Veränderung bedarfsweise auch eine Funktion des Umsetzers.

Insbesondere bedingen die Funktionen des Umsetzers, die durch das Steuerungssystem einstellbar und/oder steuer- und/oder regelbar sind, auch die Einstellgrößen. Demnach kann eine Einstellgröße gleichzeitig auch eine entsprechende Funktion des Umsetzers bedingen oder vice versa.

Alternativ oder zusätzlich kann vorgesehen sein, dass das Steuerungssystem derart ausgebildet ist, dass es bei Erkennen eines Mietenanfangs und/oder eines Mietenendes ein Einfahr- bzw. ein Ausfahrprozess des Umsetzers startet, insbesondere wobei beim Einfahr- bzw. beim Ausfahrprozess Werte und/oder Verläufe für Einstellgrößen des Umsetzers vorgegeben werden, insbesondere die Drehzahl eines Antriebsmotors des Umsetzers, die Fahrgeschwindigkeit, die Position wenigstens eines Spurräumers, die Rotordrehzahl einer Umsetzwalze des Umsetzers, die Position einer Heckklappe des Umsetzers und/oder die Höhenlage bzw. -position der Umsetzwalze.

So kann beispielsweise bei Erkennen eines Mietenendes die Umsetzwalze langsam angehoben werden, so dass sie nach Austritt aus der Miete nicht mehr mit der Miete zusammenwirkt. Bei Erkennen des Mietenanfangs kann beispielsweise die Umsetzwalze langsam herabgesenkt werden, so dass sie optimal im Hinblick auf die Mietenform ausgerichtet ist. Sowohl beim Mietenanfang als auch beim Mietenende kann bevorzugt die Fahrgeschwindigkeit verringert und entsprechend angepasst werden. Bei einer weiteren bevorzugten Ausführungsform ist vorgesehen, dass das Steuerungssystem derart ausgebildet ist, dass es bei Erkennen des Mietenanfangs den Umsetzer in Bezug zur Miete ausrichtet. Demnach kann das Steuerungssystem den Umsetzer so steuern, dass die Fahrtrichtung bei Erkennen des Mietenanfangs entsprechend ausgerichtet und vorgegeben werden kann, was wiederum insbesondere den Kompostiervorgang verbessert.

Ferner kann vorzugsweise das Steuerungssystem derart ausgebildet sein, dass bei Erkennen des Mietenendes und insbesondere bei Beendigung des Ausfahrprozesses der Umsetzer abgeschaltet wird. Eine solche Abschaltung ermöglicht einen kostengünstigen Betrieb des Umsetzers und gleichzeitig auch eine energie- bzw. ressourcenschonende Nutzung des Umsetzers. So muss die Bedienperson insbesondere den Umsetzer nicht manuell ausschalten, sondern dies kann entsprechend vorgegeben werden.

Darüber hinaus ist bei einer weiteren bevorzugten Ausführungsform vorgesehen, dass das Steuerungssystem eine Bedieneinheit aufweist und/oder zu einer Bedieneinheit koppelbar ist. Die Bedieneinheit kann insbesondere als mobile Bedieneinheit ausgebildet sein. Insbesondere können über die Bedieneinheit die Einstellgrößen und/oder die auszuführenden Funktionen für die Steuerung und/oder Regelung vorgegeben werden. Als mobile Bedieneinheit kann insbesondere ein mobiles Endgerät, wie beispielsweise ein Tablet oder dergleichen, vorgesehen sein. Über die Bedieneinheit kann eine Bedienperson dann diejenigen Größen einstellen und vorgeben, die das Steuerungssystem entsprechend anhand der festgestellten Positionen der Mietenoberseiten vorgeben kann. Demnach gestattet die Bedieneinheit einer Bedienperson, den Umsetzvorgang optimal an das jeweils umzusetzende Kompostiergut oder weiterer äußerer Randbedingungen anzupassen.

Alternativ oder zusätzlich kann vorgesehen sein, dass die von der Auswerteeinrichtung ermittelten Größen, insbesondere Mietenanfang, Mietenende, Mietenhöhe, Mietenbreite und/oder Mietenlänge und/oder die Position des Umsetzers relativ zur Miete, an die Bedieneinheit übertragbar und/oder graphisch und/oder akustisch von der Bedieneinheit darstellbar sind. Somit kann die Bedieneinheit demnach auch als Anzeigeeinrichtung genutzt werden. Über diese Bedieneinheit ist es dann für eine Bedienperson möglich, spezifische Parameter der Miete abzufragen, die er möglicherweise zur Beurteilung des Kompostiervorgangs oder zur Vorgabe weiterer Größen benötigt. Auch kann auf diese Art insbesondere das Volumen der Miete bestimmt werden, was ebenfalls für eine Bedienperson zur Beurteilung des Kompostierprozesses relevant sein kann.

Zudem kann das Steuerungssystem eine Fernsteuereinheit aufweisen und/oder zu einer Fernsteuereinheit koppelbar sein. Als Fernsteuereinheit ist insbesondere eine mobile Fernsteuereinheit vorgesehen. Die Fernsteuereinheit wiederum kann zur Fernsteuerung des Umsetzers ausgebildet sein, wobei bedarfsweise der Fahrweg des Umsetzers durch die Fernsteuereinheit steuerbar und/oder vorgebbar ist. Die Fernsteuereinheit funktioniert demnach insbesondere als "Fernbedienung" des mobilen Umsetzers. Die Fernsteuereinheit ermöglicht es einer Bedienperson, insbesondere in die autonome Fahrweise des Umsetzers einzugreifen oder händisch bestimmte Korrekturen am Fahrweg des Umsetzers oder dergleichen vornehmen zu können. Der Umsetzer kann insbesondere vollständig über die Fernsteuereinheit betätigt bzw. gesteuert werden. Die Fernsteuereinheit gestattet es demnach einer sich nicht in einer Fahrerkabine des Umsetzers befindlichen Bedienperson, den Umsetzer als solches zu lenken, zu steuern und/oder dessen Fahrweg vorgeben zu können.

In weiteren Ausführungsformen kann der Umsetzer natürlich alternativ oder zusätzlich auch über, insbesondere in der Fahrerkabine oder extern vorgesehene, Steuereinrichtungen gesteuert und/oder geregelt werden, insbesondere kann aktiv auf diese Weise in den Steuer- und/oder Regelprozess des Steuerungssystems eingegriffen werden.

Vorzugsweise kann von der Auswerteeinrichtung anhand der von der ersten und zweiten Messeinrichtung erfassten Messdaten die Ist-Fahrgeschwindigkeit des Umsetzers ermittelbar sein. Im Stand der Technik kann lediglich die Fahrgeschwindigkeit beispielsweise anhand der Drehzahl eines Kettenfahrwerks oder von Reifen oder dergleichen bestimmt werden. Diese Fahrgeschwindigkeit ist jedoch durchaus mit einem hohen Fehlerpotenzial behaftet, da hier nicht die tatsächliche Fahrgeschwindigkeit ermittelt wird, sondern die Fahrgeschwindigkeit lediglich geschätzt wird. Die Ist-Fahrgeschwindigkeit ist insbesondere für eine außenstehende Bedienperson zur Beurteilung der gesamten Zeitdauer der Umsetzung von Interesse. Auch kann bedarfsweise die Fahrgeschwindigkeit erhöht werden, sofern sich diese außerhalb eines vorgegebenen Rahmens bewegen sollte.

Darüber hinaus betrifft die vorliegende Erfindung einen mobilen Umsetzer zum Umsetzen von zu einer Miete gehäuften Schüttgut, insbesondere einer Kompostmiete, mit einem Steuerungssystem nach einem der vorgenannten Ausführungsformen und mit einem Fahrzeugkörper und einer um eine Drehachse rotierenden, an den Fahrzeugkörper gelagerten Umsetzwalze.

Es versteht sich, dass im Zusammenhang mit bevorzugten Ausführungsformen und Vorteilen des mobilen Umsetzers auf die vorgenannten Ausführungen zu bevorzugten Ausführungsformen und Vorteilen des Steuerungssystems verwiesen werden darf, die in gleicher Weise auch für den mobilen Umsetzer gelten können - und zwar ohne, dass dies weiter explizit erläutert werden müsste.

Von daher darf hiermit auf die vorgenannten Ausführungen zur Vermeidung von unnötigen Wiederholungen ausdrücklich verwiesen werden.

Der Fahrzeugkörper kann ein Fahrzeugchassis aufweisen oder als Fahrzeugchassis ausgebildet sein.

Zudem kann die erste und/oder die zweite Sensoreinrichtung am Fahrzeugkörper befestigt sein. Die jeweilige Sensoreinrichtung ist somit insbesondere unmittelbar an den Bestandteilen des Umsetzers angeordnet.

Alternativ oder zusätzlich kann vorgesehen sein, dass der Fahrzeugkörper ein Fahrwerk aufweist und/oder von einem Fahrwerk getragen wird. Der Fahrzeugkörper kann insbesondere ferner eine brückenartig die Umsatzwalze überspannende Ausbildung aufweisen. Somit kann ein Kanal zum Durchtritt des Schüttguts gebildet werden - und zwar zwischen dem Fahrzeugkörper und der Umsetzwalze. Die Umsetzwalze kann dabei unter und/oder innerhalb des Fahrzeugkörpers angeordnet werden. Der Fahrzeugkörper kann auch auf dem Fahrwerk angeordnet sein. Die erste und/oder zweite Sensoreinrichtung kann insbesondere an dem eine Brücke bildenden Abschnitt des Fahrzeugkörpers angeordnet sein. Bedarfsweise ist auch eine Fahrerkabine vorgesehen, die insbesondere auf der Oberseite der Brücke oder an einem anderen Bereich der Brücke angeordnet ist.

Es versteht sich insbesondere, dass der Umsetzer auch ohne Fahrerkabine ausgebildet sein kann. Insbesondere kann die Fahrerkabine optional auf Wunsch als "Zusatzausstattung" dem Umsetzer hinzugefügt werden.

An der Brücke kann darüber hinaus auch die Heckklappe angeordnet sein. In diesem Zusammenhang kann die Heckklappe insbesondere an der Oberseite der Brücke des Fahrzeugkörpers angeordnet sein und/oder, vorzugsweise über Hydraulikzylinder, verschwenkbar sein. Die Heckklappe kann somit ein- und ausfahrbar sein.

Insbesondere kann auch der mobile Umsetzer wenigstens einen, bevorzugt wenigstens zwei, Spurräumer aufweisen, die insbesondere an der Vorderseite des Umsetzers - der Heckklappe gegenüberliegend - angeordnet sein können. Insbesondere sind zwei Spurräumer vorgesehen. Die Spurräumer gewährleisten, dass das umzusetzende Schüttgut insbesondere in einen vorgegebenen Bereich geschoben wird. Hierzu können die Spurräumer insbesondere am und/oder benachbart zum Fahrwerk angeordnet sein, insbesondere gegenüber dem Fahrwerk abstehen. In Abhängigkeit der Ausbildung des Fahrzeugkörpers und/oder unterschiedlicher Mietenformen können auch unterschiedliche Spurräumer vorgesehen sein.

Darüber hinaus kann die Umsetzwalze zwischen zwei Schwenkarmen einer Umsetzwalzenaufhängung drehbar gelagert sein. Die Schwenkarme einer Umsetzwalzenaufhängung gewährleisten, dass insbesondere die Höhenlage bzw. die Höhenposition der Umsetzwalze verändert werden kann. Die Schwenkarme können insbesondere über Hydraulikzylinder eine Verschwenkung der Umsetzwalze ermöglichen.

Ferner kann die Umsetzwalze einen Walzenkörper und am Walzenkörper angeordnete Umsetzwerkzeuge aufweisen. Die Umsetzwerkzeuge stellen dabei die Durchmischung des Schüttgutes sicher.

Besonders bevorzugt ist der Umsetzer selbstfahrend ausgebildet. Ein außenseitiger Eingriff in die Fahrweise des Umsetzers kann insbesondere über die Fernsteuereinheit erfolgen. Das Steuerungssystem kann wiederum insbesondere die selbstfahrende Fahrweise des Umsetzers sicherstellen.

Die erste und/oder zweite Sensoreinrichtung kann bedarfsweise auf und/oder an der Fahrerkabine angeordnet sein.

Schließlich betrifft die vorliegende Erfindung noch ein Verfahren zur Steuerung und/oder Regelung eines mobilen Umsetzers nach einem der vorgenannten Ausführungsformen mit einem Steuerungssystem nach einem der vorgenannten Ausführungsformen.

Erfindungsgemäß ist vorgesehen, dass eine erste Sensoreinrichtung des Steuerungssystems die Position der Mietenoberseite vor dem Umsetzer in Bezug zur Fahrtrichtung des Umsetzers erfasst und eine zweite Sensoreinrichtung die Position der Mietenoberseite und insbesondere der Mietenbreite im Bereich des Umsetzers erfasst, wobei anhand der von der ersten und zweiten Sensoreinrichtung erfassten Messdaten der Fahrweg des Umsetzers und/oder wenigstens eine Einstellgröße und/oder wenigstens eine Funktion des Umsetzers gesteuert und/oder geregelt wird.

Es versteht sich, dass die vorgenannten Ausführungen zu dem Steuerungssystem, dem mobilen Umsetzer und/oder der Verwendung in gleicher Weise auch für das erfindungsgemäße Verfahren gelten können - und zwar sowohl was die bevorzugten Ausführungsformen als auch die Vorteile anbelangt. Diese vorgenannten Ausführungen gelten demnach auch für das Verfahren, ohne dass dies einer weiteren diesbezüglichen Erläuterung zur Vermeidung von unnötigen Wiederholungen bedarf. Natürlich gelten auch die Ausführungen zum Verfahren in gleicher Weise für die Verwendung, den mobilen Umsetzer und/oder das Steuerungssystem.

Auch mit dem erfindungsgemäßen Verfahren lässt sich eine Vielzahl von Vorteilen erreichen. Insbesondere kann der Kompostiervorgang im gesamten verbessert werden. In diesem Zusammenhang darf auf die vorgenannten Ausführungen verwiesen werden.

Des Weiteren wird ausdrücklich darauf hingewiesen, dass alle vorgenannten und nachstehenden Intervalle sämtliche darin enthaltene Zwischenintervalle und auch Einzelwerte enthalten und diese Zwischenintervalle und Einzelwerte als erfindungswesentlich anzusehen sind, auch wenn diese Zwischenintervalle oder Einzelwerte im Einzelnen nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Offenbarung.

Es zeigt:
- Fig. 1: eine schematische Darstellung einer Miete sowie eines erfindungsgemäßen Umsetzers;
- Fig. 2: eine schematische Darstellung eines Mietenquerschnitts;
- Fig. 3: eine schematische Darstellung einer erfindungsgemäßen ersten und zweiten Sensoreinrichtung;
- Fig. 4: eine schematische Darstellung eines erfindungsgemäßen ersten Sensorbereichs und eines erfindungsgemäßen zweiten Sensorbereichs;
- Fig. 5: eine schematische perspektivische Darstellung einer Miete;
- Fig. 6: eine schematische Darstellung eines erfindungsgemäßen Steuerungssystems;
- Fig. 7: eine schematische Darstellung einer erfindungsgemäßen Bedieneinheit;
- Fig. 8: eine schematische Darstellung einer erfindungsgemäßen Fernsteuereinheit;
- Fig. 9: eine schematische perspektivische Darstellung einer Miete;
- Fig. 10: eine schematische Seitenansicht auf einen erfindungsgemäßen Umsetzer;
- Fig. 11: eine weitere schematische Seitenansicht auf einen erfindungsgemäßen Umsetzer;
- Fig. 12: eine schematische perspektivische Darstellung eines erfindungsgemäßen Umsetzers;
- Fig. 13: eine schematische perspektivische Darstellung einer weiteren Ausführungsform eines erfindungsgemäßen Umsetzers;
- Fig. 14: eine schematische perspektivische Darstellung einer weiteren Ausführungsform eines erfindungsgemäßen Umsetzers und
- Fig. 15: eine schematische Frontansicht auf eine weitere Ausführungsform eines erfindungsgemäßen Umsetzers.

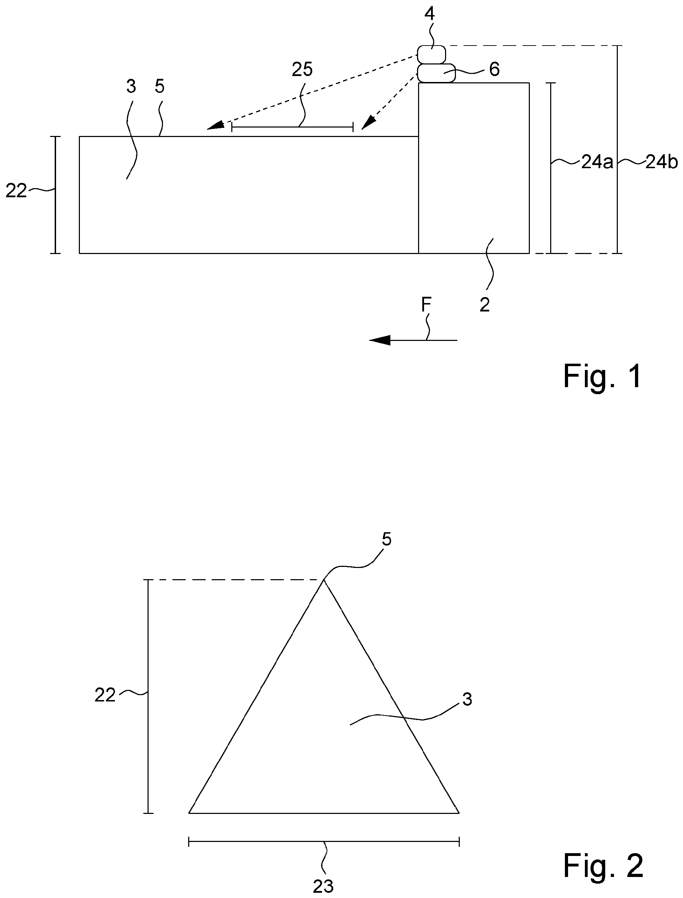

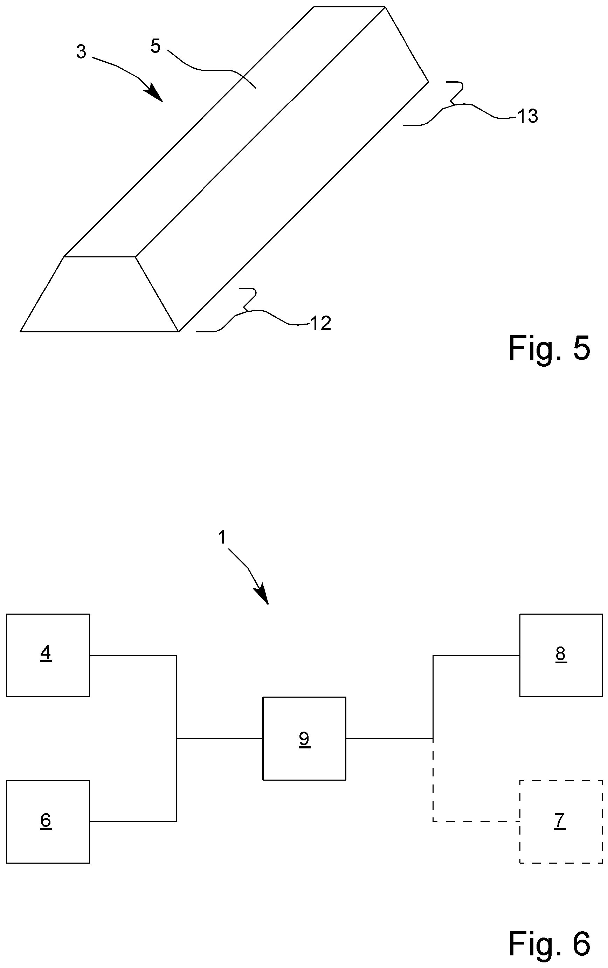

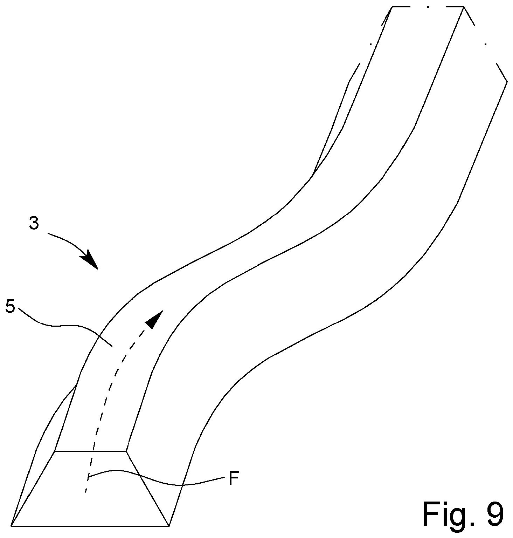

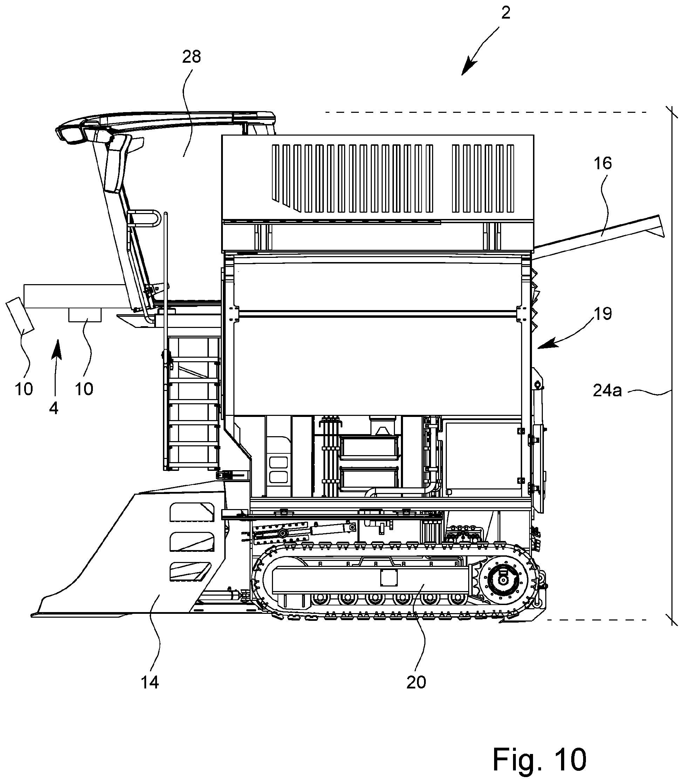

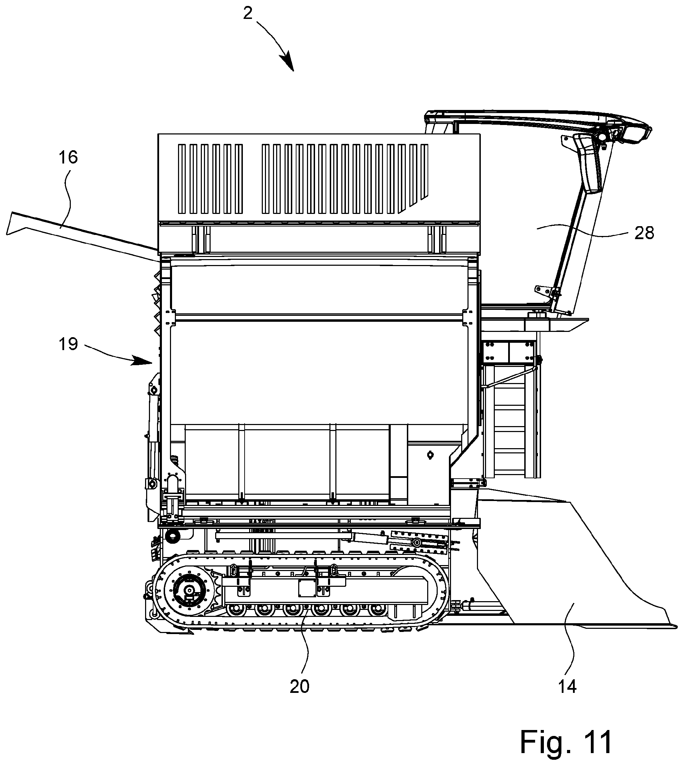

Fig. 6 zeigt ein Steuerungssystem 1 für einen mobilen Umsetzer 2. Der mobile Umsetzer 2 ist schematisch in unterschiedlichen Ausführungsformen in den Figuren 10 bis 15 dargestellt. Der Umsetzer 2 ist zum Umsetzen von zu einer Miete 3 gehäuftem Schüttgut, insbesondere einer Kompostmiete, vorgesehen. Unterschiedliche Mietenformen werden dabei in den Figuren 2, 5 und 9 dargestellt. Insbesondere ist eine Miete 3 mit einem zumindest im Wesentlichen dreieckförmigen Querschnitt vorgesehen, wie auch aus der Fig. 2 schematisch ersichtlich ist. Die Mietenoberseite 5 bzw. Mietenoberkante kann jedoch auch einen gewissen Bereich einnehmen und nicht nur als Spitze ausgebildet sein, wie die Figuren 5 und 9 darstellen. Die Miete 3 kann in Längsrichtung gerade ausgerichtet sein, wie die Fig. 5 zeigt, oder zumindest bereichsweise mäanderförmig verlaufen, wie in Fig. 9 dargestellt ist. Nach dem einmaligen oder mehrfachen Umsetzen kann die Miete 3 insbesondere zumindest im Wesentlichen gerade ausgerichtet sein.

Das Steuerungssystem 1 ist zur Steuerung und/oder zur Regelung des Umsetzers 2 ausgebildet.

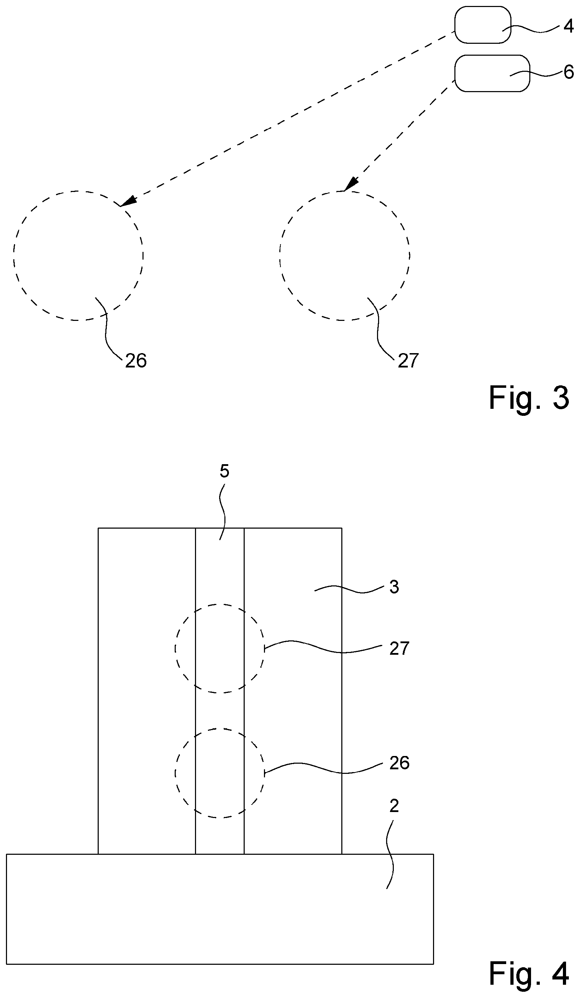

Fig. 6 zeigt, dass das Steuerungssystem 1 eine erste Sensoreinrichtung 4 zur Erfassung der Position der Mietenoberseite 5 vor dem Umsetzer 2 im Bezug zur Fahrtrichtung F des Umsetzers 2 aufweist. Die erste Sensoreinrichtung 4 kann einen ersten Sensorbereich 26 erfassen, wie die die Fig. 3 zeigt. Der erste Sensorbereich 26 ist insbesondere im Bereich der Mietenoberseite 5 vorgesehen, wie aus Fig. 4 ersichtlich ist. Insbesondere liegt der erste Sensorbereich 26 auf der Mietenoberseite 5. Der erste Sensorbereich 26 wird vor dem Umsetzer 2 gemessen und insbesondere in einem Bereich der Miete 3, der noch nicht umgesetzt ist, wie auch die Fig. 1 schematisch darstellt.

Zudem umfasst das Steuerungssystem 1 eine zweite Sensoreinrichtung 6 zur Erfassung der Position der Mietenoberseite 5 und insbesondere der Mietenbreite 23 im Bereich des Umsetzers 2. "Im Bereich des Umsetzers 2" ist weit zu verstehen, so kann ein geringfügiger Abstand zwischen dem von der zweiten Sensoreinrichtung 6 erfassten zweiten Sensorbereich 27 und dem Umsetzer 2 vorhanden sein oder der zweite Sensorbereich 27 liegt unmittelbar vor dem Umsetzer 2. Die Fig. 1 und 4 verdeutlichen, dass ein geringer Abstand zwischen dem Umsetzer 2 und dem zweiten Sensorbereich 27 vorgesehen ist. Insbesondere befindet sich der zweite Sensorbereich 27 in einem Bereich der Miete 3, der noch nicht umgesetzt worden ist. Die zweite Sensoreinrichtung 6 ist bevorzugt auch dazu ausgebildet, die Mietenbreite 23 im Bereich des Umsetzers 2 zu bestimmen. Die Mietenbreite 23 kann, muss jedoch nicht, von der ersten Sensoreinrichtung 4 erfasst werden. Die Mietenbreite 23 sowie die Mietenhöhe 22 sind schematisch für eine Miete 3 in der Fig. 2 dargestellt.

Anhand der von der ersten und zweiten Sensoreinrichtung 4, 6 erfassten Messdaten kann der Fahrweg des Umsetzers 2 und/oder wenigstens eine Einstellgröße 7 und/oder wenigstens eine Funktion 8 des Umsetzers 2 steuerbar und/oder regelbar sein, wie schematisch in Fig. 6 dargestellt ist.

Fig. 6 zeigt, dass eine mit den Sensoreinrichtungen 4, 6 gekoppelte Auswerteeinrichtung 9 des Steuerungssystems 1 vorgesehen ist, wobei die Auswerteeinrichtung 9 die von der ersten und zweiten Sensoreinrichtung 4, 6 erfassten Messdaten verarbeitet. In dem in Fig. 6 dargestellten Ausführungsbeispiel wird anhand dieser Messdaten wenigstens eine Funktion 8 des Umsetzers 2 vorgegeben. Optional kann in weiteren Ausführungsformen auch vorgesehen sein, dass alternativ oder zusätzlich eine Einstellgröße 7 des Umsetzers 2 verändert wird.

Nicht näher dargestellt ist, dass anhand der Messdaten der ersten und der zweiten Sensoreinrichtung 4, 6 auch der Fahrweg des Umsetzers 2 vorgebbar ist. So kann ermöglicht werden, dass die Fahrtrichtung F sich insbesondere einem mäanderförmigen bzw. ungeraden Verlauf der Miete 3 anpasst, wie dies in Fig. 9 dargestellt ist. Alternativ oder zusätzlich kann vorgesehen sein, dass der Umsetzer 2 die ungerade Miete 3 in eine gerade Miete 3 umsetzen kann, bevorzugt unter Verwendung des Steuerungssystems 1. Zum Umsetzen in eine gerade Miete 3 können bedarfsweise auch mehrere Umsetz-Durchgänge benötigt werden.

So können sowohl gerade Mieten 3, wie in Fig. 5 gezeigt, als auch nicht gerade verlaufende Mieten 3, wie in Fig. 9 gezeigt, effizient umgesetzt werden, wobei die Fahrtrichtung F und der Fahrweg des Umsetzers 2 insbesondere anhand des Mietenverlaufes, der Mietenform und der Mietenbreite 23 vorgegeben und/oder bestimmt werden können. Nach dem einmaligen oder mehrfachen Umsetzen sind sowohl gerade Mieten 3 als auch ungerade Mieten 3 bevorzugt zu einer geraden Miete 3 umgesetzt worden.

Die Sensoreinrichtungen 4, 6 können unmittelbar am Umsetzer 2 angeordnet oder dem Umsetzer 2 zugeordnet sein.

Letztlich dienen die ersten und die zweiten Sensoreinrichtungen 4, 6 zur Erfassung der Sensorbereiche 26, 27 und somit zur Ermittlung der Mietenform, dem Mietenverlauf und/oder der Mietenbreite 23 der Miete 3. Diese Daten können dann insbesondere für eine autonome Fahrweise und/oder für einen autonomen Betrieb des Umsetzers 2 genutzt werden. Auch kann so eine optimale Anpassung des Umsetzers 2 an äußere Umgebungsbedingungen erfolgen.

Insbesondere kann aufgrund der durch die erste und zweite Sensoreinrichtung 4, 6 erfassten Messdaten ein Richtungsvektor zur Steuerung und/oder Regelung des Fahrwegs des Umsetzers 2 durch die Auswerteeinrichtung 9 ermittelt werden und/oder ermittelbar sein.

Die von dem Steuerungssystem 1 gesteuerten Funktionen 8 und/oder gesteuerten Einstellgrößen 7 des Umsetzers 2 können unterschiedlicher Natur sein. Bedarfsweise kann eine Funktion 8 auch eine Einstellgröße 7 bedingen oder vice versa. So können insbesondere bei den Funktionen 8 unterschiedliche Bestandteile des Umsetzers 2 bewegt werden.

Beispielsweise kann die Position der Spurräumer 14, wie sie in den Figuren 10 bis 15 dargestellt sind, verändert werden. Die Spurräumer 14 sind dazu vorgesehen, dass die Miete 3 so vor dem Umsetzer 2 zusammengeschoben wird, so dass möglichst viel Schüttgut der Miete 3 umgesetzt wird. Hierzu sind die entsprechenden Spurräumer 14 vorgesehen, die bedarfsweise auch die neben den Mieten 3 vorhandenen Bereiche freiräumen.

Alternativ kann auch vorgesehen sein, dass beispielsweise die Drehzahl einer Umsetzwalze 15 verändert werden kann oder andere Bestandteile des Umsetzers 2 gesteuert und/oder geregelt werden.

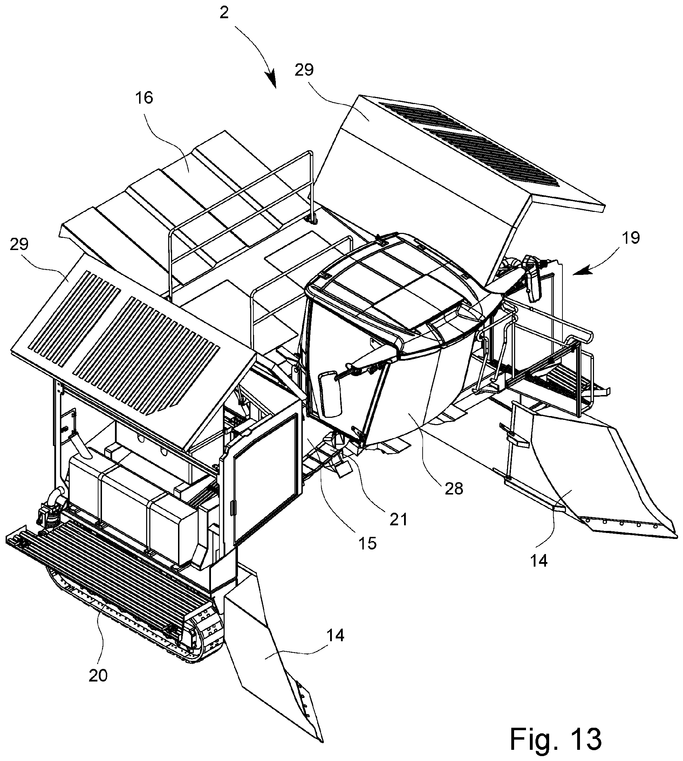

So kann der Umsetzer 2 eine Heckklappe 16 aufweisen, wie in Fig. 13 dargestellt ist. Die Heckklappe 16 kann in Abhängigkeit von unterschiedlichen Positionen innerhalb und/oder in Bezug zu der Miete 3 bedarfsweise auf- und zugeklappt werden, insbesondere in Abhängigkeit davon, wie das umgesetzte Schüttgut erneut angeordnet werden soll. Auch der Fahrweg als solches, die Fahrtrichtung, die Fahrtgeschwindigkeit oder dergleichen können anhand der von der ersten und der zweiten Sensoreinrichtung 4, 6 erfassten Messdaten entsprechend verändert werden.

Somit kann der Betrieb des Umsetzers 2 auf die tatsächlich vorhandene Form der Miete 3 abgestimmt werden.

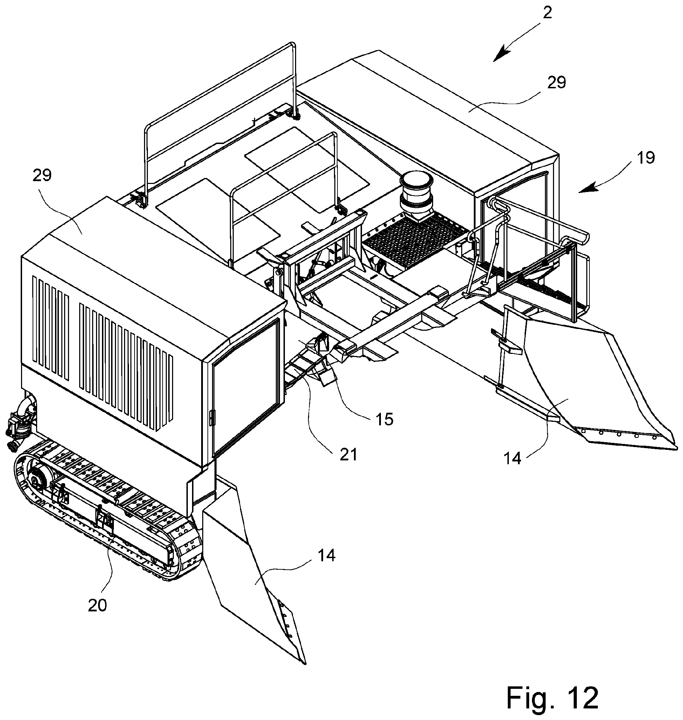

In Fig. 13 ist ein Umsetzer 2 mit geöffneten Seitenklappen 29 dargestellt, wobei die Fig. 12 die Seitenklappen 29 im geschlossenen Zustand zeigt.

Als Einstellgröße 7 des Umsetzers 2 kann auch beispielsweise die Antriebsdrehzahl des Antriebsmotors oder die Rotordrehzahl der Umsetzwalze 15 vorgesehen sein.

Letztlich können unterschiedliche Größen, wie auch die Geschwindigkeit, in Abhängigkeit der Mietenform gesteuert werden. Eine Einstellgröße 7 kann sich insbesondere von einer Funktion 8 dahingehend unterscheiden, dass beispielsweise nicht die Position oder ein Bestandteil eines Umsetzers 2 bewegt werden muss, sondern unterschiedliche Parameter des Umsetzers 2 (angepasst an die Mietenform) eingestellt bzw. gesteuert werden können.

Der Fahrweg des Umsetzers 2 kann, wie zuvor erläutert, in Abhängigkeit des Verlaufes der Miete 3 vorgegeben werden. Fig. 9 zeigt dabei eine nicht gerade verlaufende bzw. Biegungen aufweisende Miete 3. Diesem Verlauf der Miete 3 kann der Umsetzer 2 durch das Steuerungssystem 1 "automatisch" bzw. insbesondere ohne einen außenseitigen manuellen Eingriff folgen, so dass die Qualität des umgesetzten Schüttgutes und auch die Form der umgesetzten Miete 3 optimiert werden kann.

Nicht näher dargestellt ist, dass aufgrund der durch die erste und zweite Sensoreinrichtung 4, 6 erfassten Messdaten ein Richtungsvektor zur Steuerung und/oder Regelung des Fahrwegs des Umsetzers 2 durch die Auswerteeinrichtung 9 ermittelt wird und/oder ermittelbar ist.

In Fig. 4 ist dargestellt, dass der von der zweiten Sensoreinrichtung 6 erfasste zweite Sensorbereich 27 der Mietenoberseite 5 in Fahrtrichtung des Umsetzers 2 vor dem Umsetzer 2 liegt. Gleiches gilt natürlich auch für den ersten Sensorbereich 26, der ebenfalls in Fahrtrichtung F vor dem Umsetzer 2 liegt. Dennoch kann ein Abstand zwischen beiden Sensorbereichen 26, 27 vorgesehen sein.

Der von der ersten Sensoreinrichtung 4 erfasste erste Sensorbereich 26 der Mietenoberseite 5 kann wenigstens 0,5 m, insbesondere zwischen 1,5 bis 4 m, von dem von der zweiten Sensoreinrichtung 6 erfassten Sensorbereichs 27 der Mietenoberseite 5 beabstandet sein. Dieser Abstand ist schematisch auch in Fig. 1 mit der Bezugsziffer 25 gekennzeichnet.

Der erste Sensorbereich 26 ist stets in Fahrtrichtung F des Umsetzers 2 weiter vom Umsetzer 2 als der zweite Sensorbereich 27 entfernt.

Fig. 4 zeigt weiter, dass der von der ersten Sensoreinrichtung 4 erfasste erste Sensorbereich 26 der Mietenoberseite 5 wenigstens 0,5 m, bevorzugt zwischen 1,5 bis 4 m in Fahrtrichtung F vor dem Umsetzer 2 liegt. Der von der zweiten Sensoreinrichtung 6 erfasste zweite Sensorbereich 27 kann bis zu 2 m, insbesondere zwischen 0,1 bis 1 m, in Fahrtrichtung F vor dem Umsetzer 2 liegen.

Die vorgenannten Abstände der ersten und zweiten Sensorbereiche 26, 27 voneinander und vom Umsetzer 2 ermöglichen es somit, den Verlauf der Miete 3 vorhersagen zu können und so das Umsetzverhalten des Umsetzers 2 an die Mietenform anzupassen.

In Fig. 10 ist schematisch dargestellt, dass die erste Sensoreinrichtung 4 wenigstens einen Radarsensor 10 aufweist. Im dargestellten Ausführungsbeispiel sind zwei Radarsensoren 10 vorgesehen. Die Radarsensoren 10 können an unterschiedlichen Positionen am Umsetzer 2 und/oder an einem Fahrzeugkörper 19 des Umsetzers 2 angeordnet sein.

Nicht näher dargestellt ist, dass alternativ zu einem Radarsensor 10 eine andere optische Sensorik und/oder andere optische Sensoren für die erste Sensoreinrichtung 4 und/oder für die zweite Sensoreinrichtung 6 vorgesehen sein kann/können.

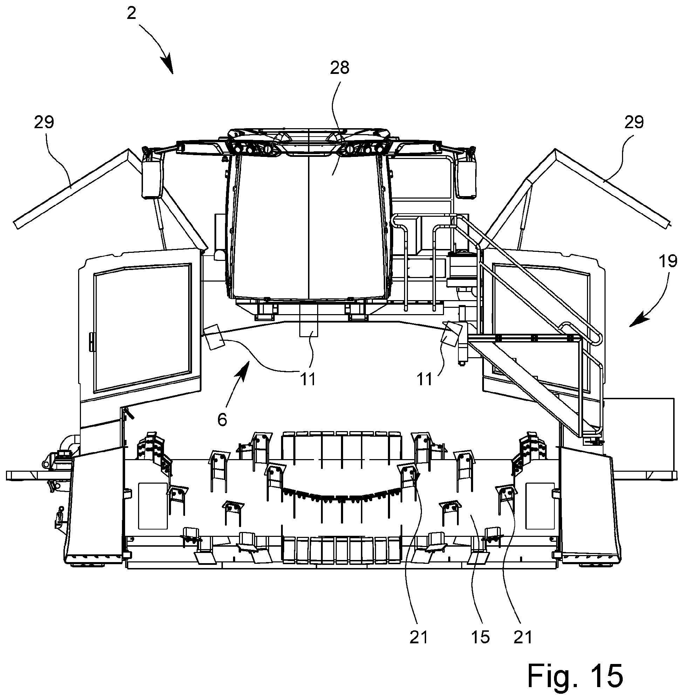

In Fig. 15 ist schematisch dargestellt, dass die zweite Sensoreinrichtung 6 drei Ultraschallsensoren 11 aufweist. Insbesondere kann für weitere Ausführungsformen der zweiten Sensoreinrichtung 6 wenigstens ein Ultraschallsensor 11 und/oder wenigstens ein Radarsensor 10 vorgesehen sein. So können in weiteren Ausführungsformen auch beide Sensoreinrichtungen 4, 6 wenigstens jeweils einen Radarsensor 10 aufweisen.

Die Sensoren der Sensoreinrichtungen 4, 6 sind dabei so ausgewählt, dass die jeweiligen Sensorbereiche 26, 27 entsprechend erfasst werden können, die sich wiederum an die Mietenoberseite 5 der Miete 3 orientieren.

Wie zuvor erläutert, können die erste und die zweite Sensoreinrichtung 4, 6 am Umsetzer 2 anordnenbar sein. Grundsätzlich kann auch vorgesehen sein, dass wenigstens eine Sensoreinrichtung 4, 6 einen Abstand zum Umsetzer 2 oder zur Umsatzwalze 15 einschließt. Insbesondere kann die erste und zweite Sensoreinrichtung 4, 6 oberhalb des Umsetzers 2, insbesondere mit einem Abstand von 0,1 bis 2 m, von der Oberseite des Umsetzers 2 beabstandet sein. Alternativ oder zusätzlich kann vorgesehen sein, dass die erste und/oder zweite Sensoreinrichtung 4, 6 an einer Fahrerkabine 28 angeordnet ist/sind.

Fig. 4 zeigt, dass der erste Sensorbereich 26 weiter weg vom Umsetzer 2 als der zweite Sensorbereich 27 angeordnet ist; der Abstand kann so ausgewählt sein - in weiteren Ausführungsformen -, dass der erste Sensorbereich 26 zwischen 1 m und 10 m weiter vom Umsetzer 2 als der zweite Sensorbereich 27 weg beabstandet ist.

Nicht näher dargestellt ist, dass die erste und/oder zweite Sensoreinrichtung 4, 6 in weiteren Ausführungsformen von dem Umsetzer 2 beabstandet angeordnet ist, insbesondere um maximal 1 m, bevorzugt zwischen 0,1 m bis 0,7 m. Zudem ist nicht dargestellt, dass die erste und/oder die zweite Sensoreinrichtung 4, 6 über wenigstens ein Verbindungsmittel mit dem Umsetzer 2 verbunden ist.

Insbesondere ist die Fahrerkabine 28 nur optional vorgesehen. Der Umsetzer 2 kann auch ohne Fahrerkabine 28 bereitgestellt werden, dann sind insbesondere die erste und/oder zweite Sensoreinrichtung 4, 6 an anderen Bestandteilen des Umsetzers 2 angeordnet.

In Fig. 1 ist schematisch dargestellt, dass zumindest die Höhe 24a der ersten Sensoreinrichtung 4 ausgehend vom Boden größer als die Höhe 24b des Umsetzers 2 ausgebildet ist. Auch die Höhe der zweiten Sensoreinrichtung 6 kann größer als die Höhe 24b des Umsetzers 2 ausgebildet sein.

Die Miete 3 kann einen Mietenanfang 12 und ein Mietenende 13 aufweisen, wie dies schematisch in Fig. 5 dargestellt ist. Dabei kann das Mietenende 13 und/oder der Mietenanfang 12 ein Bereich der Miete 3 sein, insbesondere jeweils bis zu 10 % im Hinblick der Gesamtlänge der Miete 3 einschließen. Die Auswerteeinrichtung 9 kann insbesondere durch Verarbeiten der von der ersten und zweiten Sensoreinrichtung 4, 6 erfassten Messdaten zur Ermittlung des Mietenanfangs 12 und/oder des Mietenendes 13 ausgebildet sein. Diese Informationen können insbesondere dazu genutzt werden, den Betrieb des Umsetzers 2 auch in Abhängigkeit des Beginns und des Endes der Miete 3 entsprechend steuern und/oder regeln zu können.

Nicht näher dargestellt ist, dass das Steuerungssystem 1 derart ausgebildet ist, dass es bei Erkennen eines Mietenanfangs 12 und/oder eines Mietenendes 13 wenigstens eine Funktion 8 und/oder Einstellgröße 7 des Umsetzers 2 verstellt und/oder eine solche aktiviert wird. Insbesondere kann die Drehzahl eines Antriebsmotors des Umsetzers 2, die Fahrgeschwindigkeit, die Position wenigstens eines Spurräumers 14, die Rotordrehzahl einer Umsetzwalze 15 des Umsetzers 2, die Position einer Heckklappe 16 des Umsetzers 2 gesteuert und/oder geregelt und/oder ein Heben bzw. Lenken der Umsetzwalze 15 veranlasst werden.

In den dargestellten Ausführungsformen ist nicht näher gezeigt, dass bedarfsweise die Umsetzwalze 15 gehoben oder gesenkt werden kann. Hierzu kann vorgesehen sein, dass die Umsetzwalze 15 an entsprechenden Schwenkarmen gelagert ist, so dass ein Verschwenken der Umsatzwalze 15 grundsätzlich ermöglicht werden kann.

So kann beispielsweise ein Einfahren bzw. ein Senken der Umsetzwalze 15 am Mietenanfang 12 und ein Ausfahren bzw. Ausschwenken der Umsetzwalze 15 am Mietenende 13 vorgesehen sein.

Insbesondere kann das Steuerungssystem 1 derart ausgebildet sein, dass es bei Erkennen eines Mietenanfangs 12 und/oder eines Mietenendes 13 ein Einfahr- bzw. ein Ausfahrprozess des Umsetzers 2 startet, insbesondere wobei beim Einfahr- bzw. Ausfahrprozess Werte und/oder Verläufe für Einstellgrößen 7 des Umsetzers 2 vorgegeben werden. Insbesondere kann dies die Drehzahl eines Antriebsmotors des Umsetzers 2, die Fahrgeschwindigkeit, die Position wenigstens eines Spurräumers 14, die Rotordrehzahl einer Umsetzwalze 15, die Position einer Heckklappe 16 und/oder die Position einer Umsetzwalze 15 sein. Insbesondere kann beispielsweise der Umsetzer 2 mit einer gegenüber der Betriebsfahrgeschwindigkeit langsameren Fahrtgeschwindigkeit am Mietenanfang 12 und am Mietenende 13 durch die Miete 3 geführt werden.

Ebenfalls nicht näher dargestellt ist, dass das Steuerungssystem 1 derart ausgebildet ist, dass es bei Erkennen des Mietenanfangs 12 den Umsetzer 2 in Bezug zur Miete 3 ausrichtet und/oder dass nach Erkennen des Mietenendes 13 der Ausfahrprozess eingeleitet und nach Beendigung des Ausfahrprozesses der Umsetzer 2 abgeschaltet wird.

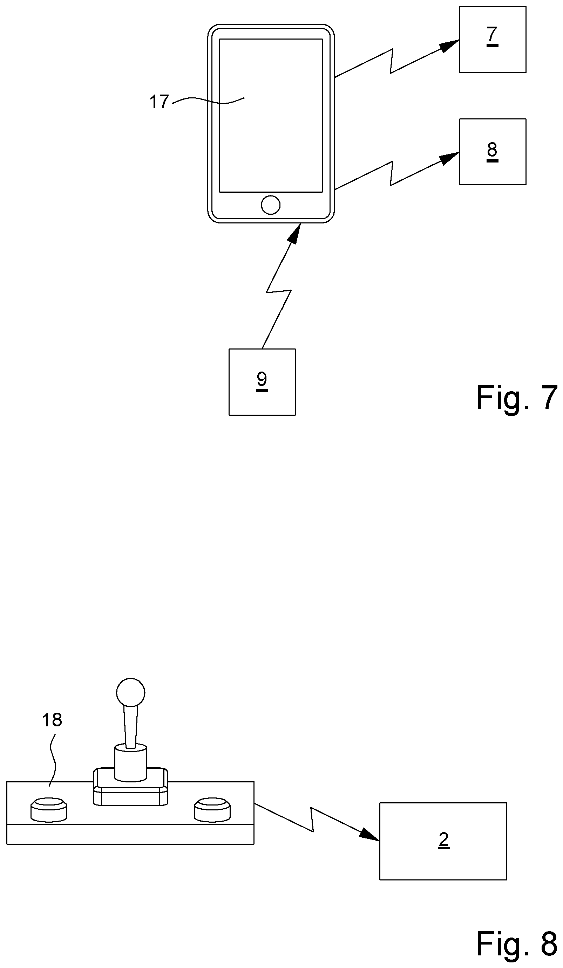

In Fig. 7 ist schematisch dargestellt, dass das Steuerungssystem 1 eine Bedieneinheit 17 aufweist. Die Bedieneinheit 17 kann insbesondere mobil und bevorzugt als mobiles Endgerät, wie als Telefon, Tablet oder dergleichen, ausgebildet sein. Alternativ oder zusätzlich kann vorgesehen sein, dass das Steuerungssystem 1 zu einer Bedieneinheit 17 koppelbar ist. Über die Bedieneinheit 17 können insbesondere die Einstellgrößen 7 und/oder die auszuführenden Funktionen 8 für die Steuerung und/oder die Regelung vorgegeben werden. So kann beispielsweise anhand der Bedieneinheit 17 aktiv in den Steuerungsprozess des Umsetzers 2 eingegriffen werden, so dass beispielsweise in Abhängigkeit von bestimmten Mietenformen auch bestimmte Funktionen 8 oder Einstellgrößen 7 für den Umsetzer vorgegeben oder verändert werden können.

Besonders bevorzugt können auch die von der Auswerteeinrichtung 9 ermittelten Größen, insbesondere der Mietenanfang 12, Mietenende 13, Mietenbreite 23, Mietenhöhe 22 und/oder Mietenlänge und/oder Position des Umsetzers 2 relativ zur Miete 3, an die Bedieneinheit 17 übertragbar sein, bevorzugt graphisch und/oder akustisch von der Bedieneinheit 17 darstellbar sein. Dies ist schematisch in Fig. 7 dargestellt, die eine Informationsübertragung von der Auswerteeinrichtung 9 an die Bedieneinheit 17 darstellt. So kann beispielsweise einem Benutzer der tatsächliche Fahrverlauf des Umsetzers 2 und/oder die tatsächliche Ist-Geschwindigkeit des Umsetzers 2 entsprechend angezeigt werden. Die Bedieneinheit 17 ermöglicht es somit, für einen Außenstehenden in den Umsetzprozess aktiv eingreifen zu können oder sich bestimmte Paramater des Umsetzers 2 anzeigen zu lassen.

In Fig. 8 ist eine Fernsteuereinheit 18 gezeigt, die Teil des Steuerungssystems 1 und/oder zu dem Steuerungssystem 1 koppelbar sein kann. Die Fernsteuereinheit 18 kann zur Fernsteuerung des Umsetzers 2 ausgebildet sein. Insbesondere kann der Fahrweg des Umsetzers 2 durch die Fernsteuereinheit 18 steuerbar und/vorgebbar sein. Die Fernsteuereinheit 18 kann insbesondere unabhängig bzw. zusätzlich zur Bedieneinheit 17 bereitgestellt werden. Die Bedieneinheit 17 ermöglicht es letztlich, aktiv in den Steuerungsprozess des Steuerungssystems 1 einzugreifen. Die Fernsteuereinheit 18 kann dabei - insbesondere unabhängig von den erfassten Messdaten des Steuerungssystems 2 - den Fahrweg des Umsetzers 2 steuern. Diese Fernsteuereinheit 18 ist insbesondere dann sinnvoll, wenn der Umsetzer 2 beispielsweise nicht über entsprechende in der, insbesondere optionalen, Fahrerkabine 28 angeordnete Einrichtungen steuerbar ist. So kann der Umsetzer 2 beispielsweise über die Fernsteuereinheit 18 zur Miete 3 verfahren werden, wobei dann anschließend der "automatisch gesteuerte Fahrtverlauf" des Umsetzers 2 durch entsprechende Steuerung und/oder Regelung über das Steuerungssystem 1 eingeleitet werden kann.

In weiteren, nicht näher dargestellten Ausführungsformen können die Bedieneinheit 17 und die Fernsteuereinheit 18 auch in einer gemeinsamen Einrichtung oder in einem gemeinsamen mobilen Endgerät realisiert sein. Bevorzugt sind jedoch zwei unterschiedliche Einheiten vorgesehen. Die Fernsteuereinheit 18 kann beispielsweise ein Joystick oder dergleichen zur einfachen Steuerung und zur Vorgabe des Fahrweges aufweisen.

Zudem ist nicht näher dargestellt, dass von der Auswerteeinrichtung 9 anhand der von der ersten und zweiten Sensoreinrichtung 4, 6 erfassten Messdaten die Ist-Fahrgeschwindigkeit des Umsetzers 2 ermittelbar ist. Diese Ist-Fahrgeschwindigkeit kann durch Verarbeitung (Korrelation ermitteln) der tatsächlichen Abstände zwischen dem ersten und zweiten Sensorbereich 26, 27 bzw. zwischen dem jeweiligen Sensorbereich 26, 27 zum Umsetzer 2 ermittelt werden. Im Stand der Technik kann die Ist-Fahrgeschwindigkeit nicht ermittelt und nur anhand beispielsweise der Drehzahl des Fahrwerks 20 die entsprechende Geschwindigkeit des Umsetzers 2 geschätzt werden. Die tatsächliche Geschwindigkeit des Umsetzers 2 ist insbesondere zur Ermittlung der gesamten Dauer des Umsetzprozesses sinnvoll.

Des Weiteren ist ein mobiler Umsetzer 2 zum Umsetzen von zu einer Miete 3 gehäuften Schüttgut, insbesondere einer Kompostmiete, vorgesehen, wie schematisch in den Figuren 10 bis 15 dargestellt ist. Dieser mobile Umsetzer 2 kann ein Steuerungssystem 1 nach einem der vorgenannten Ausführungsformen aufweisen. Ferner umfasst der Umsetzer 2 auch einen Fahrzeugkörper 19 und eine um eine Drehachse rotierbare, am Fahrzeugkörper 19 gelagerte Umsetzwalze 15.

Es versteht sich, dass im Hinblick auf Ausführungen zu dem Umsetzer 2 auf die vorgenannten Ausführungen zu dem Steuerungssystem 1, die auch Ausführungen zu dem Umsetzer 2 beinhaltet haben, verwiesen werden darf. Gleichfalls gelten die Ausführungen zu dem mobilem Umsetzer 2 in gleicher Weise insbesondere auch für das Steuerungssystem 1.

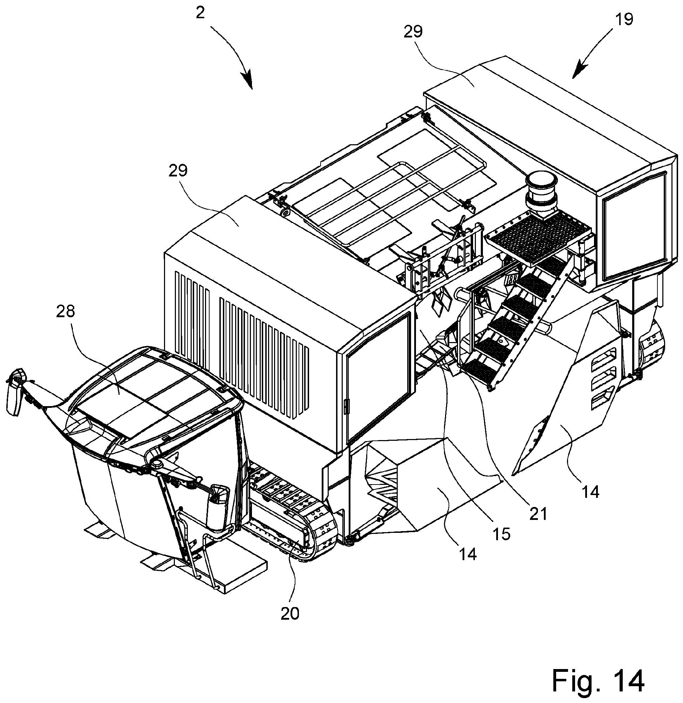

Der Fahrzeugkörper 19 kann ein Fahrwerk 20 aufweisen und/oder von einem Fahrwerk 20 getragen werden, wie dies schematisch in Fig. 14 dargestellt ist. Als Fahrwerk 20 können Reifen oder ein Raupenfahrwerk oder dergleichen vorgesehen sein. Das Fahrwerk 20 kann insbesondere unabhängig von der Umsetzwalze 15 angetrieben werden. Der Antrieb sowohl des Fahrwerks 20 als auch bedarfsweise der Umsetzwalze 15 kann insbesondere von dem Steuerungssystem 1 gesteuert und/oder geregelt werden. Durch das Steuerungssystem 1 wird bevorzugt ein autonomer Betrieb des Umsetzers 2 gewährleistet bzw. der Umsetzer 2 kann sich dem tatsächlichen Verlauf der Miete 3 entsprechend anpassen.

In Fig. 15 ist gut ersichtlich, dass der Fahrzeugkörper 19 sich brückenartig über die Umsatzwalze 15 spannt bzw. brückenartig die Umsatzwalze 15 überspannt, insbesondere so dass zwischen dem Fahrzeugkörper 19 und der Umsetzwalze 15 ein Kanal zum Durchtritt des Schüttguts gebildet wird. An dem Fahrzeugkörper 19 kann ferner auch eine ausklappbare Heckklappe 16 angeordnet sein, wie die Fig. 13 schematisch darstellt.

Die Umsetzwalze 15 kann einen Walzenkörper und am Walzenkörper angeordnete Umsetzwerkzeuge 21 aufweisen, wie auch die Fig. 15 zeigt. Die Umsetzwerkzeuge 21 sind insbesondere so ausgebildet und angeordnet, dass ein optimales Umsetzen der Miete 3 erfolgt.

Wie zuvor erläutert, kann der Umsetzer 2 insbesondere selbstfahrend ausgebildet sein und bevorzugt zusätzlich anhand einer Fernsteuereinheit 18 bedarfsweise ferngesteuert werden.

Ferner kann der Umsetzer 2 bedarfsweise auch, insbesondere über in der Fahrerkabine 28 angeordnete, Einrichtungen gesteuert und/oder geregelt werden, insbesondere wird mittels dieser Einrichtungen auch ein aktiver Eingriff in die Steuerung und/oder Regelung des Steuerungssystems 1 ermöglicht und/oder dieses kann bedarfsweise deaktiviert und/oder aktiviert werden.

Nicht näher dargestellt ist, dass die Umsetzwalze 15 auch bedarfsweise höhenverstellbar ist und insbesondere zwischen zwei Schwenkarmen eine Umsatzwalzenaufhängung drehbar gelagert ist.

Nicht näher dargestellt ist die Verwendung eines Steuerungssystems 1 nach einem der vorgenannten Ausführungsformen für einen mobilen Umsetzer 2 zum Umsetzen von zu einer Miete 3 gehäuften Schüttgut.

Des Weiteren ist ebenfalls kein Verfahren zur Steuerung und/oder Regelung eines mobilen Umsetzers 2 nach einer der vorgenannten Ausführungsformen unter Verwendung eines Steuerungssystem 1 nach einem der zuvor diskutierten Ausführungsformen gezeigt.

Bei dem nicht näher dargestellten Verfahren kann vorgesehen sein, dass eine erste Sensoreinrichtung 4 die Position der Mietenoberseite 5 vor dem Umsetzer 2 im Bezug zur Fahrtrichtung F des Umsetzers 2 erfasst und eine zweite Sensoreinrichtung 6 die Position der Mietenoberseite 5 und insbesondere der Mietenbreite 23 im Bereich des Umsetzers 2 erfasst.

Anhand der von der ersten und zweiten Sensoreinrichtung 4, 6 erfassten Messdaten kann der Fahrweg des Umsetzers 2 und/oder wenigstens eine Einstellgröße 7 und/oder wenigstens eine Funktion 8 des Umsetzers 2 gesteuert und/oder geregelt werden.

### Bezugszeichenliste:

- 1: Steuerungssystem
- 2: Umsetzer
- 3: Miete
- 4: erste Sensoreinrichtung
- 5: Mietenoberseite
- 6: zweite Sensoreinrichtung
- 7: Einstellgröße
- 8: Funktion
- 9: Auswerteeinrichtung
- 10: Radarsensor
- 11: Ultraschallsensor
- 12: Mietenanfang
- 13: Mietenende
- 14: Spurräumer
- 15: Umsetzwalze
- 16: Heckklappe
- 17: Bedieneinheit
- 18: Fernsteuereinheit
- 19: Fahrzeugkörper
- 20: Fahrwerk
- 21: Umsetzwerkzeuge
- 22: Mietenhöhe
- 23: Mietenbreite
- 24a: Höhe von 2
- 24b: Höhe von 4
- 25: Abstand
- 26: erster Sensorbereich
- 27: zweiter Sensorbereich
- 28: Fahrerkabine
- 29: Seitenklappen

- F: Fahrtrichtung

## Patentansprüche

1. Verwendung eines Steuerungssystems (1) für einen mobilen Umsetzer (2) zum Umsetzen von zu einer Miete (3) gehäuftem Schüttgut, insbesondere einer Kompostmiete,
wobei das Steuerungssystem (1) zur Steuerung und/oder Regelung des Umsetzers (2) ausgebildet ist,
wobei das Steuerungssystem (1) eine erste Sensoreinrichtung (4) zur Erfassung der Position der Mietenoberseite (5) vor dem Umsetzer (2) in Bezug zur Fahrtrichtung (F) des Umsetzers (2) und eine zweite Sensoreinrichtung (6) zur Erfassung der Position der Mietenoberseite (5) und insbesondere der Mietenbreite (23) im Bereich des Umsetzers (2) aufweist,
wobei anhand der von der ersten und zweiten Sensoreinrichtung (4, 6) erfassten Messdaten der Fahrweg des Umsetzers (2) und/oder wenigstens eine Einstellgröße (7) und/oder wenigstens eine Funktion (8) des Umsetzers (2) gesteuert und/oder geregelt ist.

2. Verwendung eines Steuerungssystems nach Anspruch 1, **dadurch gekennzeichnet, dass** eine mit den Sensoreinrichtungen (4, 6) gekoppelte Auswerteeinrichtung (9) des Steuerungssystems (1) vorgesehen ist, wobei die Auswerteeinrichtung (9) die von der ersten und zweiten Sensoreinrichtung (4, 6) erfassten Messdaten verarbeitet.

3. Verwendung eines Steuerungssystems nach Anspruch 1 oder 2, **dadurch gekennzeichnet, dass** aufgrund der durch die erste und zweite Sensoreinrichtung (4, 6) erfassten Messdaten ein Richtungsvektor zur Steuerung und/oder Regelung des Fahrwegs des Umsetzers (2) durch die Auswerteeinrichtung (9) ermittelt wird und/oder ermittelbar ist.

4. Verwendung eines Steuerungssystems nach einem der vorhergehenden Ansprüche, **dadurch gekennzeichnet, dass** der von der zweiten Sensoreinrichtung (6) erfasste zweite Sensorbereich (27) der Mietenoberseite (5) in Fahrtrichtung (F) des Umsetzers (2) vor dem Umsetzer (2) liegt und/oder
dass der von der ersten Sensoreinrichtung (4) erfasste erste Sensorbereich (26) weiter weg vom Umsetzer (2) als der von der zweiten Sensoreinrichtung (6) erfasste zweite Sensorbereich (27) angeordnet ist, bevorzugt um wenigstens 0,5 m und 20 m, weiter bevorzugt weiter zwischen 1 m und 10 m und insbesondere zwischen 1,5 m bis 4 m, weiter beabstandet vom Umsetzer (2) und/oder
dass der von der ersten Sensoreinrichtung (4) erfasste erste Sensorbereich (26) der Mietenoberseite (5) wenigstens 0,5 m, bevorzugt zwischen 0,5 m bis 20 m, weiter bevorzugt zwischen 1 bis 10 m, insbesondere zwischen 1,5 bis 4 m, von dem von der zweiten Sensoreinrichtung (6) erfassten zweiten Sensorbereich (27) der Mietenoberseite (5) beabstandet ist und/oder
dass der von der ersten Sensoreinrichtung (4) erfasste erste Sensorbereich (26) der Mietenoberseite (5) wenigstens 0,5 m, bevorzugt zwischen 0,5 bis 20 m, weiter bevorzugt zwischen 1 bis 10 m, insbesondere zwischen 1,5 bis 4 m, in Fahrtrichtung (F) vor dem Umsetzer (2) liegt und/oder dass der von der zweiten Sensoreinrichtung (6) erfasste zweite Sensorbereich (27) der Mietenoberseite (5) bis zu 2 m, weiter bevorzugt zwischen 0,1 bis 1 m, in Fahrtrichtung (F) vor dem Umsetzer (2) liegt.

5. Verwendung eines Steuerungssystems nach einem der vorhergehenden Ansprüche, **dadurch gekennzeichnet, dass** die erste Sensoreinrichtung (4) wenigstens einen Radarsensor (10) aufweist und/oder
dass die zweite Sensoreinrichtung (6) wenigstens einen Radarsensor (10) und/oder wenigstens einen, bevorzugt zwischen 2 bis 10, insbesondere 3, Ultraschallsensor(en) (11) aufweist und/oder
dass die erste und/oder zweite Sensoreinrichtung (4, 6) wenigstens einen optischen Sensor und/oder eine optische Sensorik aufweist.

6. Verwendung eines Steuerungssystems nach einem der vorhergehenden Ansprüche, **dadurch gekennzeichnet, dass** die erste und die zweite Sensoreinrichtung (4, 6) am Umsetzer (2) anordnenbar sind, insbesondere wobei die erste und/oder die zweite Sensoreinrichtung (4, 6) oberhalb des Umsetzers (2), bevorzugt mit einem Abstand von 0,1 bis 2 m von der Oberseite des Umsetzers (2), und/oder an einer Fahrerkabine (28) des Umsetzers (2) anordnenbar ist/sind, und/oder dass die erste und/oder die zweite Sensoreinrichtung (4, 6) von dem Umsetzer (2) beabstandet ist, bevorzugt in Fahrtrichtung (F) vor dem Umsetzer (2) angeordnet sind, bevorzugt um maximal 1 m, insbesondere wobei die erste und/oder die zweite Sensoreinrichtung (4, 6) über wenigstens ein Verbindungsmittel mit dem Umsetzer (2) verbunden ist.

7. Verwendung eines Steuerungssystems nach einem der vorhergehenden Ansprüche, **dadurch gekennzeichnet, dass** die Auswerteeinrichtung (9) durch Verarbeiten der von der ersten und zweiten Sensoreinrichtung (4, 6) erfassten Messdaten zur Ermittlung des Mietenanfangs (12) und/oder Mietenendes (13) ausgebildet ist.

8. Verwendung eines Steuerungssystems nach einem der vorhergehenden Ansprüche, **dadurch gekennzeichnet, dass** das Steuerungssystem (1) derart ausgebildet ist, dass es bei Erkennen eines Mietenanfangs (12) und/oder eines Mietenendes (13) wenigstens eine Funktion (8) und/oder wenigstens eine Einstellgröße (7) des Umsetzers (2) verstellt und/oder aktiviert wird, insbesondere die Drehzahl eines Antriebsmotors des Umsetzers (2), die Fahrgeschwindigkeit, die Position wenigstens eines Spurräumers (14), die Rotordrehzahl einer Umsetzwalze (15) des Umsetzers (2), die Position einer Heckklappe (16) des Umsetzers (2) und/oder Heben bzw. Senken der Umsetzwalze (15), und/oder
dass das Steuerungssystem (1) derart ausgebildet ist, dass es bei Erkennen eines Mietenanfangs (12) und/oder eines Mietenendes (13) einen Einfahr- bzw. Ausfahrprozess des Umsetzers (2) startet, insbesondere wobei beim Einfahr- bzw. Ausfahrprozess Werte und/oder Verläufe für Einstellgrößen (7) des Umsetzers (2) vorgegeben werden, insbesondere die Drehzahl eines Antriebsmotors des Umsetzers (2), die Fahrgeschwindigkeit, die Position wenigstens eines Spurräumers (14), die Rotordrehzahl einer Umsetzwalze (15) des Umsetzers (2), die Position einer Heccklappe (16) des Umsetzers (2) und/oder die Höhenposition der Umsetzwalze (15).

9. Verwendung eines Steuerungssystems nach einem der vorhergehenden Ansprüche, **dadurch gekennzeichnet, dass** das Steuerungssystem (1) derart ausgebildet ist, dass es bei Erkennen des Mietenanfangs (12) den Umsetzer (2) in Bezug zur Miete (3) ausrichtet und/oder
dass das Steuerungssystem (1) derart ausgebildet ist, dass es bei Erkennen des Mietenendes (13) und nach Beendigung des Ausfahrprozesses den Umsetzer (2) abgeschaltet.

10. Verwendung eines Steuerungssystems nach einem der vorhergehenden Ansprüche, **dadurch gekennzeichnet, dass** das Steuerungssystem (1) eine, insbesondere mobile, Bedieneinheit (17) aufweist und/oder zu einer Bedieneinheit (17) koppelbar ist, insbesondere wobei über die Bedieneinheit (17) die Einstellgrößen (7) und/oder die auszuführenden Funktionen (8) für die Steuerung und/oder Regelung vorgegeben werden können, und/oder
wobei die von der Auswerteeinrichtung (9) ermittelten Größen, insbesondere Mietenanfang (12), Mietenende (13), Mietenhöhe, Mietenbreite (23) und/oder Mietenlänge und/oder die Position des Umsetzers (2) relativ zur Miete (3), an die Bedieneinheit (17) übertragbar und graphisch und/oder akustisch von der Bedieneinheit (17) darstellbar sind und/oder
dass das Steuerungssystem (1) eine, insbesondere mobile, Fernsteuereinheit (18) umfasst und/oder zu einer Fernsteuereinheit (18) koppelbar ist, wobei die Fernsteuereinheit (18) zur Fernsteuerung des Umsetzers (2) ausgebildet ist und/oder wobei der Fahrweg des Umsetzers (2) durch die Fernsteuereinheit (18) steuerbar und/oder vorgebbar ist.

11. Verwendung eines Steuerungssystems nach einem der vorhergehenden Ansprüche, **dadurch gekennzeichnet, dass** von der Auswerteeinrichtung (9) anhand der von der ersten und zweiten Sensoreinrichtung (4, 6) erfassten Messdaten die Ist-Fahrgeschwindigkeit des Umsetzers (2) ermittelbar ist.

12. Mobiler Umsetzer (2) zum Umsetzen von zu einer Miete (3) gehäuften Schüttgut, insbesondere einer Kompostmiete, mit einem Steuerungssystem (1) und mit einem Fahrzeugkörper (19) und einer um eine Drehachse rotierbaren, an dem Fahrzeugkörper (19) gelagerten Umsetzwalze (15),
wobei das Steuerungssystem (1) zur Steuerung und/oder Regelung des Umsetzers (2) ausgebildet ist,
wobei das Steuerungssystem (1) eine erste Sensoreinrichtung (4) zur Erfassung der Position der Mietenoberseite (5) vor dem Umsetzer (2) in Bezug zur Fahrtrichtung (F) des Umsetzers (2) und eine zweite Sensoreinrichtung (6) zur Erfassung der Position der Mietenoberseite (5) und insbesondere der Mietenbreite (23) im Bereich des Umsetzers (2) aufweist,
wobei anhand der von der ersten und zweiten Sensoreinrichtung (4, 6) erfassten Messdaten der Fahrweg des Umsetzers (2) und/oder wenigstens eine Einstellgröße (7) und/oder wenigstens eine Funktion (8) des Umsetzers (2) steuerbar und/oder regelbar ist.

13. Mobiler Umsetzer nach Anspruch 12, **dadurch gekennzeichnet, dass** die erste und/oder zweite Sensoreinrichtung (4, 6) am Fahrzeugkörper (19) befestigt sind.

14. Mobiler Umsetzer nach Anspruch 12 oder 13, **dadurch gekennzeichnet, dass** der Fahrzeugkörper (19) ein Fahrwerk (20) aufweist und/oder von einem Fahrwerk (20) getragen wird und/oder
dass der Fahrzeugkörper (19) brückenartig die Umsetzwalze (15) überspannt, insbesondere so dass zwischen dem Fahrzeugkörper (19) und der Umsetzwalze (15) ein Kanal zum Durchtritt des Schüttguts gebildet wird, und/oder
dass die Umsetzwalze (15) einen Walzenkörper und am Walzenkörper angeordnete Umsetzwerkzeuge (21) aufweist und/oder
dass der Umsetzer (2) selbstfahrend ausgebildet ist und/oder
dass die Umsetzwalze (15) zwischen zwei Schwenkarmen einer Umsetzwalzenaufhängung drehbar gelagert ist.

15. Verfahren zur Steuerung und/oder Regelung eines mobilen Umsetzers (2) nach einem der Ansprüche 12 bis 14 mit einem Steuerungssystem (1) zur Steuerung und/oder Regelung des Umsetzers (2),
wobei eine erste Sensoreinrichtung (4) des Steuerungssystems (1) die Position der Mietenoberseite (5) vor dem Umsetzer (2) in Bezug zur Fahrtrichtung (F) des Umsetzers (2) erfasst und eine zweite Sensoreinrichtung (6) die Position der Mietenoberseite (5) und insbesondere der Mietenbreite (23) im Bereich des Umsetzers (2) erfasst,
wobei anhand der von der ersten und zweiten Sensoreinrichtung (4, 6) erfassten Messdaten der Fahrweg des Umsetzers (2) und/oder wenigstens eine Einstellgröße (7) und/oder wenigstens eine Funktion (8) des Umsetzers (2) gesteuert und/oder geregelt wird.

## Claims

1. Use of a control system (1) for a mobile turner (2) for transferring bulk material piled up in a heap (3), in particular a compost heap,
wherein the control system (1) is designed to control and/or regulate the turner (2),
wherein the control system (1) has a first sensor device (4) for detecting the position of the top of the heap (5) in front of the turner (2) in relation to the direction of travel (F) of the turner (2) and a second sensor device (6) for detecting the position of the top of the heap (5) and, in particular, the width of the heap (23) in the area of the turner (2),
wherein the travel path of the turner (2) and/or at least one control variable (7) and/or at least one function (8) of the turner (2) is controlled and/or regulated on the basis of the measurement data detected by the first and second sensor devices (4, 6).

2. Use of a control system according to claim 1, **characterized in that** an evaluation device (9) of the control system (1) coupled to the sensor devices (4, 6) is provided, wherein the evaluation device (9) processes the measurement data recorded by the first and second sensor devices (4, 6).

3. Use of a control system according to claim 1 or 2, **characterized in that**, based on the measurement data detected by the first and second sensor devices (4, 6), a direction vector for controlling and/or regulating the travel path of the turner (2) is determined and/or can be determined by the evaluation device (9).

4. Use of a control system according to one of the preceding claims, **characterized in that** the second sensor area (27) of the top of the heap (5) detected by the second sensor device (6) is located in front of the turner (2) in the direction of travel (F) of the turner (2) and/or
**in that** the first sensor area (26) detected by the first sensor device (4) is located further away from the turner (2) than the second sensor area (27) detected by the second sensor device (6), preferably by at least 0.5 m and 20 m, more preferably between 1 m and 10 m and in particular between 1.5 m and 4 m, further away from the turner (2) and/or
**in that** the first sensor area (26) of the top of the heap (5) detected by the first sensor device (4) is at least 0.5 m, preferably between 0.5 m and 20 m, more preferably between 1 and 10 m, in particular between 1.5 and 4 m, from the second sensor area (27) of the top of the heap (5) detected by the second sensor device (6) and/or
**in that** the first sensor area (26) of the top of the heap (5) detected by the first sensor device (4) is at least 0.5 m, preferably between 0.5 and 20 m, more preferably between 1 and 10 m, in particular between 1.5 and 4 m, in the direction of travel (F) in front of the turner (2) and/or that the second sensor area (27) of the top of the heap (5) detected by the second sensor device (6) is located up to 2 m, more preferably between 0.1 and 1 m, in the direction of travel (F) in front of the turner (2).

5. Use of a control system according to one of the preceding claims, **characterized in that** the first sensor device (4) has at least one radar sensor (10) and/or
**in that** the second sensor device (6) has at least one radar sensor (10) and/or at least one, preferably between 2 and 10, in particular 3, ultrasonic sensor(s) (11) and/or
**in that** the first and/or second sensor device (4, 6) has at least one optical sensor and/or one optical sensor system.

6. Use of a control system according to one of the preceding claims, **characterized in that** the first and second sensor devices (4, 6) can be arranged on the turner (2), in particular wherein the first and/or second sensor device (4, 6) is arranged above the turner (2), preferably at a distance of 0.1 to 2 m from the top of the turner (2), and/or on a driver's cab (28) of the turner (2), and/or **in that** the first and/or second sensor device (4, 6) is spaced apart from the turner (2), preferably arranged in front of the turner (2) in the direction of travel (F), preferably by a maximum of 1 m, in particular wherein the first and/or second sensor device (4, 6) is connected to the turner (2) via at least one connecting means.

7. Use of a control system according to one of the preceding claims, **characterized in that** the evaluation device (9) is designed to determine the start (12) and/or end (13) of the heap by processing the measurement data recorded by the first and second sensor devices (4, 6).

8. Use of a control system according to one of the preceding claims, **characterized in that** the control system (1) is designed such that, upon detection of a start of a heap (12) and/or an end of a heap (13), at least one function (8) and/or at least one control variable (7) of the turner (2) is adjusted and/or activated, in particular the speed of a drive motor of the turner (2), the travel speed, the position of at least one track clearer (14), the rotor speed of a compaction roller (15) of the turner (2), the position of a tailgate (16) of the turner (2) and/or the raising or lowering of the compaction roller (15), and/or
**in that** the control system (1) is designed in such a way that, when it detects the start (12) and/or end (13) of a heap, it starts a drive-in and/or drive-out process of the turner (2), in particular wherein, during the drive-in and/or drive-out process, values and/or curves for control variables (7) of the turner (2) are specified during the drive-in and/or drive-out process, in particular the speed of a drive motor of the turner (2), the travel speed, the position of at least one track clearer (14), the rotor speed of a compaction roller (15) of the turner (2), the position of a tailgate (16) of the turner (2) and/or the height position of the compaction roller (15).

9. Use of a control system according to one of the preceding claims, **characterized in that** the control system (1) is designed such that, upon detection of the start of the heap (12), it aligns the turner (2) in relation to the heap (3) and/or
**in that** the control system (1) is designed such that, upon detecting the end of the heap (13) and after completion of the extension process, it switches off the turner (2).

10. Use of a control system according to one of the preceding claims, **characterized in that** the control system (1) has a control unit (17), in particular a mobile control unit, and/or can be coupled to a control unit (17), in particular wherein the control variables (7) and/or the functions (8) to be performed for the control and/or regulation can be specified via the operating unit (17), and/or
wherein the variables determined by the evaluation device (9), in particular the start of the heap (12), the end of the heap (13), the height of the heap, the width of the heap (23) and/or the length of the heap and/or the position of the turner (2) relative to the heap (3), can be transmitted to the control unit (17) and displayed graphically and/or acoustically by the control unit (17), and/or
**in that** the control system (1) comprises a remote control unit (18), in particular a mobile remote control unit (18), and/or can be coupled to a remote control unit (18), wherein the remote control unit (18) is designed for remote control of the turner (2) and/or wherein the travel path of the turner (2) can be controlled and/or predetermined by the remote control unit (18).

11. Use of a control system according to one of the preceding claims, **characterized in that** the actual travel speed of the turner (2) can be determined by the evaluation device (9) on the basis of the measurement data recorded by the first and second sensor devices (4, 6).

12. Mobile turner (2) for transferring bulk material piled up in a heap (3), in particular a compost heap, with a control system (1) and with a vehicle body (19) and a compaction roller (15) mounted on the vehicle body (19) and rotatable about an axis of rotation,
wherein the control system (1) is designed to control and/or regulate the turner (2),
wherein the control system (1) has a first sensor device (4) for detecting the position of the top of the heap (5) in front of the turner (2) in relation to the direction of travel (F) of the turner (2) and a second sensor device (6) for detecting the position of the top of the heap (5) and, in particular, the width of the heap (23) in the area of the turner (2),
wherein the travel path of the turner (2) and/or at least one control variable (7) and/or at least one function (8) of the turner (2) can be controlled and/or regulated on the basis of the measurement data detected by the first and second sensor devices (4, 6).

13. Mobile turner according to claim 12, **characterized in that** the first and/or second sensor devices (4, 6) are attached to the vehicle body (19).

14. Mobile turner according to claim 12 or 13, **characterized in that** the vehicle body (19) has a chassis (20) and/or is carried by a chassis (20) and/or
**in that** the vehicle body (19) spans the compaction roller (15) in a bridge-like manner, in particular so that a channel for the passage of the bulk material is formed between the vehicle body (19) and the compaction roller (15), and/or
**in that** the compaction roller (15) has a roller body and compaction tools (21) arranged on the roller body, and/or
**in that** the turner (2) is self-propelled and/or
**in that** the compaction roller (15) is rotatably mounted between two pivot arms of a compaction roller suspension.

15. Method for controlling and/or regulating a mobile turner (2) according to one of claims 12 to 14 with a control system (1) for controlling and/or regulating the turner (2),
wherein a first sensor device (4) of the control system (1) detects the position of the top of the heap (5) in front of the turner (2) in relation to the direction of travel (F) of the turner (2), and a second sensor device (6) detects the position of the top of the heap (5) and, in particular, the width of the heap (23) in the area of the turner (2),
wherein the travel path of the turner (2) and/or at least one control variable (7) and/or at least one function (8) of the turner (2) is controlled and/or regulated on the basis of the measurement data detected by the first and second sensor devices (4, 6).

## Revendications

1. Utilisation d'un système de commande (1) pour un retourneur mobile (2) destiné à transborder des matériaux en vrac empilés en un tas (3), en particulier un tas de compost,
le système de commande (1) étant conçu pour commander et/ou réguler le retourneur (2),
le système de commande (1) comportant un premier dispositif de détection (4) pour détecter la position de la face supérieure du tas (5) devant le retourneur (2) par rapport au sens de déplacement (F) du retourneur (2) et un deuxième dispositif de détection (6) pour détecter la position de la face supérieure du tas (5) et en particulier la largeur du tas (23) dans la zone du retourneur (2),
la trajectoire du retourneur (2) et/ou au moins une grandeur de réglage (7) et/ou au moins une fonction (8) du retourneur (2) étant commandées et/ou régulées à l'aide des données de mesure détectées par les premier et deuxième dispositifs de détection (4, 6).

2. Utilisation d'un système de commande selon la revendication 1, **caractérisée en ce qu'**un dispositif d'évaluation (9) du système de commande (1) couplé aux dispositifs de détection (4, 6) est prévu, le dispositif d'évaluation (9) traitant les données de mesure enregistrées par les premier et deuxième dispositifs de détection (4, 6).

3. Utilisation d'un système de commande selon la revendication 1 ou 2, **caractérisée en ce qu'**un vecteur directionnel pour la commande et/ou la régulation de la trajectoire du retourneur (2) est déterminée et/ou peut être déterminé par le dispositif d'évaluation (9) sur la base des données de mesure enregistrées par les premier et deuxième dispositifs de détection (4, 6).

4. Utilisation d'un système de commande selon l'une des revendications précédentes, **caractérisée en ce que** la deuxième zone de détection (27) de la face supérieure du tas (5) détectée par le deuxième dispositif de détection (6) se trouve devant le retourneur (2) dans le sens de déplacement (F) du retourneur (2) et/ou
**en ce que** la première zone de détection (26) détectée par le premier dispositif de détection (4) est située plus loin du retourneur (2) que la deuxième zone de détection (27) détectée par le deuxième dispositif de détection (6), de préférence d'au moins 0,5 m et 20 m, de préférence entre 1 m et 10 m, et en particulier entre 1,5 m et 4 m, plus éloignée du retourneur (2) et/ou
**en ce que** la première zone de détection (26) de la face supérieure du tas (5), détectée par le premier dispositif de détection (4), est d'au moins 0,5 m, de préférence comprise entre 0,5 m et 20 m, de préférence entre 1 et 10 m, en particulier entre 1,5 et 4 m, de la deuxième zone de détection (27) de la face supérieure du tas (5) détecté par le deuxième dispositif de détection (6) et/ou
**en ce que** la première zone de détection (26) de la face supérieure du tas (5) détectée par le premier dispositif de détection (4) est espacée d'au moins 0,5 m, de préférence entre 0,5 et 20 m, de préférence encore entre 1 et 10 m, en particulier entre 1,5 et 4 m, dans le sens de déplacement (F) devant le retourneur (2) et/ou que la deuxième zone de détection (27) de la face supérieure du tas (5) détectée par le deuxième dispositif de détection (6) se trouve jusqu'à 2 m, de préférence entre 0,1 et 1 m, dans le sens de déplacement (F) devant le retourneur (2).

5. Utilisation d'un système de commande selon l'une des revendications précédentes, **caractérisée en ce que** le premier dispositif de détection (4) comporte au moins un capteur radar (10) et/ou
**en ce que** le deuxième dispositif de détection (6) comporte au moins un capteur radar (10) et/ou au moins un, de préférence entre 2 et 10, en particulier 3, capteur(s) à ultrasons (11) et/ou
**en ce que** le premier et/ou le deuxième dispositif de détection (4, 6) comporte au moins un capteur optique et/ou un système de capteurs optiques.

6. Utilisation d'un système de commande selon l'une des revendications précédentes, **caractérisée en ce que** le premier et le deuxième dispositif de détection (4, 6) peuvent être disposés sur le retourneur (2), en particulier le premier et/ou le deuxième dispositif de détection (4, 6) pouvant être disposés au-dessus du retourneur (2), de préférence à une distance de 0,1 à 2 m de la face supérieure du retourneur (2), et/ou sur une cabine de conduite (28) du retourneur (2), et/ou **en ce que** le premier et/ou le deuxième dispositif de détection (4, 6) sont espacés du retourneur (2), de préférence disposés devant le retourneur (2) dans le sens de déplacement (F), de préférence à une distance maximale de 1 m, en particulier le premier et/ou le deuxième dispositif capteur (4, 6) étant relié au retourneur (2) par au moins un moyen de liaison.

7. Utilisation d'un système de commande selon l'une des revendications précédentes, **caractérisée en ce que** le dispositif d'évaluation (9) est conçu pour déterminer le début (12) et/ou la fin (13) de l'andain en traitant les données de mesure enregistrées par les premier et deuxième dispositifs de détection (4, 6).

8. Utilisation d'un système de commande selon l'une des revendications précédentes, **caractérisée en ce que** le système de commande (1) est conçu de telle sorte que, lorsqu'il détecte un début du tas (12) et/ou une fin du tas (13), il modifie et/ou active au moins une fonction (8) et/ou au moins une grandeur de réglage (7) du retourneur (2) est modifiée et/ou activée, en particulier la vitesse de rotation d'un moteur d'entraînement du retourneur (2), la vitesse de déplacement, la position d'au moins un déblayeur de voie (14), la vitesse de rotation du rotor d'un rouleau de transfert (15) du retourneur (2), la position d'un hayon arrière (16) du retourneur (2) et/ou le levage ou l'abaissement du rouleau de transfert (15), et/ou
**en ce que** le système de commande (1) est conçu de telle sorte qu'il démarre un processus d'entrée ou de sortie du retourneur (2) lorsqu'il détecte le début (12) et/ou la fin (13) du tas, en particulier lorsque, lors du processus d'entrée ou de sortie, des valeurs et/ou des courbes pour des grandeurs de réglage (7) du retourneur (2) sont prédéfinies, en particulier la vitesse de rotation d'un moteur d'entraînement du retourneur (2), la vitesse de déplacement, la position d'au moins un déblayeur de voie (14), la vitesse de rotation du rotor d'un rouleau de transfert (15) du retourneur (2), la position d'un hayon arrière (16) du retourneur (2) et/ou la position en hauteur du rouleau de transfert (15).

9. Utilisation d'un système de commande selon l'une des revendications précédentes, **caractérisée en ce que** le système de commande (1) est conçu de telle sorte que, lorsqu'il détecte le début du tas (12), il aligne le retourneur (2) par rapport à l'andain (3) et/ou
**en ce que** le système de commande (1) est conçu de telle sorte qu'il désactive le retourneur (2) lorsqu'il détecte la fin du tas (13) et après la fin du processus de sortie.

10. Utilisation d'un système de commande selon l'une des revendications précédentes, **caractérisée en ce que** le système de commande (1) comporte une unité de commande, en particulier mobile, unité de commande (17) et/ou peut être couplé à une unité de commande (17), en particulier l'unité de commande (17) permettant de prédéfinir les grandeurs de réglage (7) et/ou les fonctions (8) à exécuter pour la commande et/ou la régulation, et/ou
**en ce que** les grandeurs déterminées par le dispositif d'évaluation (9), en particulier le début du tas (12), la fin du tas (13), la hauteur du tas, la largeur du tas (23) et/ou la longueur du tas et/ou la position du retourneur (2) par rapport au tas (3), peuvent être transmises à l'unité de commande (17) et représentées graphiquement et/ou acoustiquement par l'unité de commande (17) et/ou
**en ce que** le système de commande (1) comprend une unité de commande à distance (18), en particulier mobile, et/ou peut être couplé à une unité de commande à distance (18), l'unité de commande à distance (18) étant conçue pour la commande à distance du retourneur (2) et/ou la trajectoire du retourneur (2) pouvant être commandée et/ou prédéfinie par l'unité de commande à distance (18).

11. Utilisation d'un système de commande selon l'une des revendications précédentes, **caractérisée en ce que** la vitesse de déplacement réelle du retourneur (2) peut être déterminée par le dispositif d'évaluation (9) à partir des données de mesure enregistrées par les premier et deuxième dispositifs de détection (4, 6).

12. Retourneur mobile (2) pour transporter des matériaux en vrac empilés en un tas (3), en particulier un tas de compost, comprenant un système de commande (1) et une carrosserie du véhicule (19) et un rouleau de transfert (15) pouvant tourner autour d'un axe de rotation et monté sur la carrosserie du véhicule (19),
le système de commande (1) étant conçu pour commander et/ou réguler le retourneur (2),
le système de commande (1) comportant un premier dispositif de détection (4) pour détecter la position de la face supérieure du tas (5) devant le retourneur (2) par rapport au sens de déplacement (F) du retourneur (2) et un deuxième dispositif de détection (6) pour détecter la position de la face supérieure du tas (5) et en particulier la largeur du tas (23) dans la zone du retourneur (2),
la trajectoire du retourneur (2) et/ou au moins une grandeur de réglage (7) et/ou au moins une fonction (8) du retourneur (2) pouvant être commandées et/ou régulées à l'aide des données de mesure détectées par les premier et deuxième dispositifs de détection(4, 6).

13. Convertisseur mobile selon la revendication 12, **caractérisé en ce que** le premier et/ou le deuxième dispositif de détection (4, 6) sont fixés à la carrosserie du véhicule (19).

14. Convertisseur mobile selon la revendication 12 ou 13, **caractérisé en ce que** la carrosserie du véhicule (19) comporte un châssis (20) et/ou est supportée par un châssis (20) et/ou
**en ce que** la carrosserie du véhicule (19) enjambe le rouleau de transfert (15) à la manière d'un pont, en particulier de manière à former entre la carrosserie du véhicule (19) et le rouleau de transfert (15) un canal pour le passage du matériau en vrac, et/ou
**en ce que** le rouleau de transfert (15) comporte un corps de rouleau et des outils de transfert (21) disposés sur le corps de rouleau et/ou
**en ce que** le retourneur (2) est conçu pour être automoteur et/ou
**en ce que** le rouleau de transfert (15) est monté de manière pivotante entre deux bras pivotants d'une suspension de rouleau de transfert.

15. Procédé de commande et/ou de régulation d'un retourneur mobile (2) selon l'une des revendications 12 à 14, avec un système de commande (1) pour commander et/ou réguler le retourneur (2),
un premier dispositif de détection (4) du système de commande (1) détectant la position de la face supérieure du tas (5) devant le retourneur (2) par rapport au sens de déplacement (F) du retourneur (2) et un deuxième dispositif de détection (6) détecte la position de la face supérieure du tas (5) et en particulier la largeur du tas (23) dans la zone du retourneur (2),
la trajectoire du retourneur (2) et/ou au moins une grandeur de réglage (7) et/ou au moins une fonction (8) du retourneur (2) étant commandées et/ou régulées à l'aide des données de mesure détectées par les premier et deuxième dispositifs de détection (4, 6).
